# EUROPEAN PATENT APPLICATION

(11) **EP 4 404 630 A1**
(43) Date of publication of application: **24.07.2024**
(21) Application number: 22883559.1
(22) Date of filing: 18.10.2022
(51) Int. Cl.: H04W 40/02, H04W 24/04, H04W 80/04, H04W 88/08

(54) **COMMUNICATION CONTROL METHOD AND BOUNDARY IAB NODE**

(30) Priority: 19.10.2021 US 202163257223 P
(71) Applicant: Kyocera Corporation, Kyoto-shi Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2022/038724
(87) International publication number: WO 2023/068255

(57) **Abstract**

In a first aspect, a communication control method is a communication control method in a boundary IAB node. The boundary IAB node has RRC connection with a first IAB donor for controlling a first IAB topology and RRC connection with a second IAB donor for controlling a second IAB topology. The boundary IAB node has F1 connection with the first IAB donor, and does not have F1 connection with the second IAB donor. The communication control method includes receiving BAP header rewriting configuration information from the first IAB donor, receiving a BAP packet from a lower IAB node, performing BAP header rewriting processing for the BAP packet received, based on header information of the BAP packet and the BAP header rewriting configuration information, and performing routing, via the second IAB topology, of the BAP packet for which the BAP header rewriting processing has been performed.

## Description

### TECHNICAL FIELD

The present disclosure relates to a communication control method and a boundary IAB node.

### BACKGROUND OF INVENTION

In the Third Generation Partnership Project (3GPP), which is a project for the standardization of cellular communication systems, introducing a new relay node referred to as an Integrated Access and Backhaul (IAB) node (for example, see "3GPP TS 38.300 V16.7.0 (2021-09)") is being considered. One or more relay nodes are involved in communication between a base station and a user equipment and perform relay for the communication.

### SUMMARY

In a first aspect, a communication control method is a communication control method in a boundary IAB node. The boundary IAB node has RRC connection with a first IAB donor for controlling a first IAB topology and RRC connection with a second IAB donor for controlling a second IAB topology. The boundary IAB node has F1 connection with the first IAB donor, and does not have F1 connection with the second IAB donor. The communication control method includes receiving BAP header rewriting configuration information from the first IAB donor, receiving a BAP packet from a lower IAB node, performing BAP header rewriting processing for the BAP packet received, based on header information of the BAP packet and the BAP header rewriting configuration information, and performing routing, via the second IAB topology, of the BAP packet for which the BAP header rewriting processing has been performed.

In a second aspect, a boundary IAB node has RRC connection with a first IAB donor for controlling a first IAB topology and RRC connection with a second IAB donor for controlling a second IAB topology. The boundary IAB node has F1 connection with the first IAB donor, and does not have F1 connection with the second IAB donor. The boundary IAB node includes a processor. The processor is configured to execute processing of receiving BAP header rewriting configuration information from the first IAB donor, processing of receiving a BAP packet from a lower IAB node, processing of performing BAP header rewriting processing for the BAP packet received, based on header information of the BAP packet and the BAP header rewriting configuration information, and processing of performing routing, via the second IAB topology, of the BAP packet for which the BAP header rewriting processing has been performed.

### BRIEF DESCRIPTION OF THE DRAWINGS

FIG. 1 is a diagram illustrating a configuration example of a cellular communication system according to an embodiment.
FIG. 2 is a diagram illustrating a relationship between an IAB node, parent nodes, and child nodes.
FIG. 3 is a diagram illustrating a configuration example of a gNB (base station) according to the embodiment.
FIG. 4 is a diagram illustrating a configuration example of an IAB node (relay node) according to the embodiment.
FIG. 5 is a diagram illustrating a configuration example of a UE (user equipment) according to the embodiment.
FIG. 6 is a diagram illustrating an example of a protocol stack related to an RRC connection and a NAS connection of an IAB-MT.
FIG. 7 is a diagram illustrating an example of a protocol stack related to an F1-U protocol.
FIG. 8 is a diagram illustrating an example of a protocol stack related to an F1-C protocol.
FIG. 9A is a diagram illustrating a configuration example of a topology of an "intra-CU/intra-donor-DU" scenario, FIG. 9B is a diagram illustrating a configuration example of a topology of an "intra-CU/inter-donor-DU" scenario, and FIG. 9C is a diagram illustrating a configuration example of a topology of an "inter-CU" scenario.
FIG. 10 is a diagram illustrating a first operation example according to a first embodiment.
FIG. 11 is a diagram of summary of the first operation example according to the first embodiment.
FIG. 12 is a diagram illustrating an operation example according to Variation 4 of the first embodiment.
FIG. 13 is a diagram illustrating a second operation example according to the first embodiment.
FIG. 14 is a diagram illustrating a configuration example of a BAP Data PDU packet according to the first embodiment.
FIG. 15 is a diagram illustrating a third operation example according to the first embodiment.
FIG. 16 is a diagram illustrating a fourth operation example according to the first embodiment.
FIG. 17 is a diagram illustrating a fifth operation example according to the first embodiment.
FIG. 18 is a diagram illustrating a sixth operation example according to the first embodiment.
FIG. 19A and FIG. 19B are each a diagram illustrating a configuration example of a topology according to a second embodiment.
FIG. 20 is a diagram illustrating an operation example according to the second embodiment.
FIG. 21 is a diagram illustrating a variation according to the second embodiment.
FIG. 22 is a diagram illustrating a first operation example according to a third embodiment.
FIG. 23 is a diagram of a summary of the first operation example according to the third embodiment.
FIG. 24 is a diagram illustrating a second operation example according to the third embodiment.
FIG. 25 is a diagram illustrating a third operation example according to the third embodiment.
FIG. 26 is a summary of the third operation example according to the third embodiment.
FIG. 27 illustrates a configuration example of an IAB node according to a fourth embodiment.

### DESCRIPTION OF EMBODIMENTS

A cellular communication system in an embodiment is described with reference to the drawings. In the description of the drawings, the same or similar parts are denoted by the same or similar reference signs.

### Configuration of Cellular Communication System

A configuration example of the cellular communication system according to an embodiment is described. In an embodiment, a cellular communication system 1 is a 3GPP 5G system. Specifically, a radio access scheme in the cellular communication system 1 is New Radio (NR) being a 5G radio access scheme. Note that Long Term Evolution (LTE) may be at least partially applied to the cellular communication system 1. A future cellular communication system such as 6G may be applied to the cellular communication system 1.

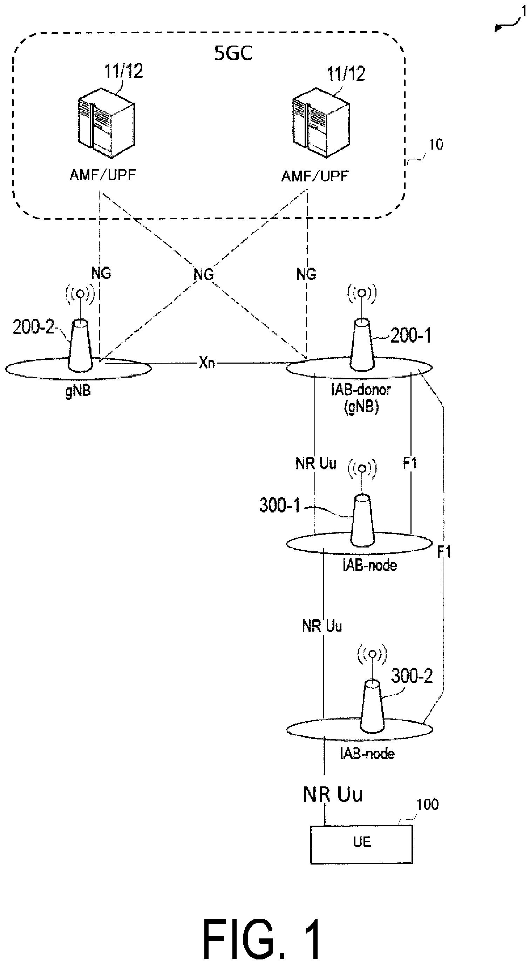

FIG. 1 is a diagram illustrating a configuration example of the cellular communication system 1 according to the embodiment.

As illustrated in FIG. 1, the cellular communication system 1 includes a 5G core network (5GC) 10, a User Equipment (UE) 100, base station apparatuses (hereinafter, also referred to as base stations in some cases) 200-1 and 200-2, and IAB nodes 300-1 and 300-2. The base station 200 may be referred to as a gNB.

An example in which the base station 200 is an NR base station is mainly described below, but the base station 200 may also be an LTE base station (i.e., an eNB).

Note that hereinafter, the base stations 200-1 and 200-2 may be referred to as a gNB 200 (or the base station 200 in some cases), and the IAB nodes 300-1 and 300-2 may be referred to as an IAB node 300.

The 5GC 10 includes an Access and Mobility Management Function (AMF) 11 and a User Plane Function (UPF) 12. The AMF 11 is an apparatus that performs various types of mobility controls and the like for the UE 100. The AMF 11 communicates with the UE 100 by using Non-Access Stratum (NAS) signaling, and thereby manages information of an area in which the UE 100 exists. The UPF 12 is an apparatus that performs transfer control of user data and the like.

Each gNB 200 is a fixed wireless communication node and manages one or more cells. The term "cell" is used to indicate a minimum unit of a wireless communication area. The term "cell" may be used to indicate a function or a resource for performing wireless communication with the UE 100. One cell belongs to one carrier frequency. Hereinafter, the cell and the base station may be used without distinction.

Each gNB 200 is interconnected to the 5GC 10 via an interface referred to as an NG interface. FIG. 1 illustrates a gNB 200-1 and a gNB 200-2 that are connected to the 5GC 10.

Each gNB 200 may be divided into a Central Unit (CU) and a Distributed Unit (DU). The CU and the DU are interconnected via an interface referred to as an F1 interface. An F1 protocol is a communication protocol between the CU and the DU and includes an F1-C protocol that is a control plane protocol and an F1-U protocol that is a user plane protocol.

The cellular communication system 1 supports an IAB that uses NR for the backhaul to enable wireless relay of the NR access. The donor gNB 200-1 (or a donor node, which hereinafter may be also referred to as a "donor node") is a donor base station that is a terminal node of the NR backhaul on the network side and includes additional functionality for supporting the IAB. The backhaul can implement multi-hop via a plurality of hops (i.e., a plurality of IAB nodes 300).

FIG. 1 illustrates an example in which the IAB node 300-1 is wirelessly connected to the donor node 200-1, the IAB node 300-2 is wirelessly connected to the IAB node 300-1, and the F1 protocol is transmitted in two backhaul hops.

The UE 100 is a mobile wireless communication apparatus that performs wireless communication with the cells. The UE 100 may be any type of apparatus as long as the UE 100 is an apparatus that performs wireless communication with the gNB 200 or the IAB node 300. For example, the UE 100 includes a mobile phone terminal, a tablet terminal, a laptop PC, a sensor or an apparatus that is provided in a sensor, a vehicle or an apparatus that is provided in a vehicle, and an aircraft or an apparatus provided in an aircraft. The UE 100 is wirelessly connected to the IAB node 300 or the gNB 200 via an access link. FIG. 1 illustrates an example in which the UE 100 is wirelessly connected to the IAB node 300-2. The UE 100 indirectly communicates with the donor node 200-1 via the IAB node 300-2 and the IAB node 300-1.

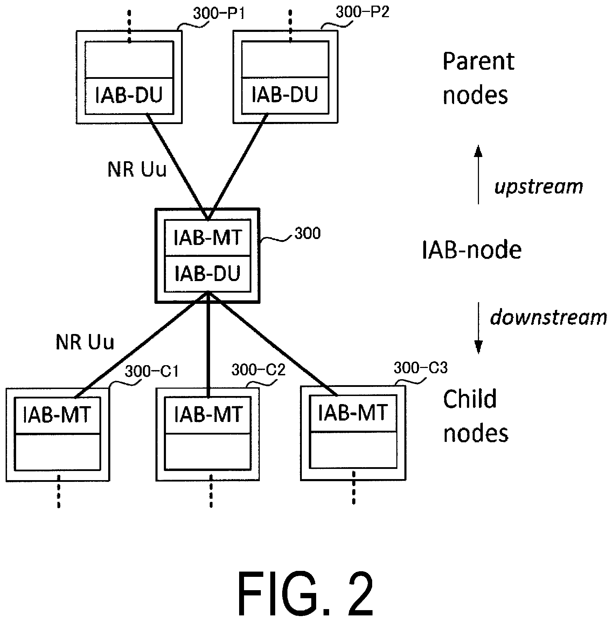

FIG. 2 is a diagram illustrating an example of a relationship between the IAB node 300, parent nodes, and child nodes.

As illustrated in FIG. 2, each IAB node 300 includes an IAB-DU corresponding to a base station functional unit and an IAB-Mobile Termination (IAB-MT) corresponding to a user equipment functional unit.

Neighboring nodes of the IAB-MT (i.e., upper node) of an NR Uu wireless interface are referred to as "parent nodes". The parent node is the DU of a parent IAB node or the donor node 200. A radio link between the IAB-MT and each parent node is referred to as a backhaul link (BH link). FIG. 2 illustrates an example in which the parent nodes of the IAB node 300 are IAB nodes 300-P1 and 300-P2. Note that the direction toward the parent nodes is referred to as upstream. As viewed from the UE 100, the upper nodes of the UE 100 can correspond to the parent nodes.

Neighboring nodes of the IAB-DU (i.e., lower nodes) of an NR access interface are referred to as "child nodes". The IAB-DU manages cells in a manner the same as, and/or similar to the gNB 200. The IAB-DU terminates the NR Uu wireless interface connected to the UE 100 and the lower IAB nodes. The IAB-DU supports the F1 protocol for the CU of the donor node 200-1. FIG. 2 illustrates an example in which the child nodes of the IAB node 300 are IAB nodes 300-C1 to 300-C3; however, the UE 100 may be included in the child nodes of the IAB node 300. Note that the direction toward the child nodes is referred to as downstream.

All of the IAB nodes 300 connected to the donor node 200 via one or more hops form a Directed Acyclic Graph (DAG) topology (which may be referred to as "topology" below) rooted at the donor node 200. In this topology, the neighboring nodes of the IAB-DU in the interface are child nodes, and the neighboring nodes of the IAB-MT in the interface are parent nodes as illustrated in FIG. 2. The donor node 200 performs, for example, centralized management on resources, topology, and routes of the IAB topology. The donor node 200 is a gNB that provides network access to the UE 100 via a network of backhaul links and access links.

### Configuration of Base Station

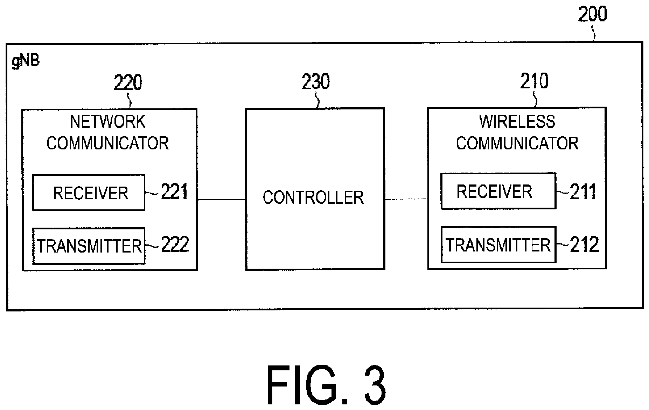

A configuration of the gNB 200 that is a base station according to the embodiment is described. FIG. 3 is a diagram illustrating a configuration example of the gNB 200. As illustrated in FIG. 3, the gNB 200 includes a wireless communicator 210, a network communicator 220, and a controller 230.

The wireless communicator 210 performs wireless communication with the UE 100 and performs wireless communication with the IAB node 300. The wireless communicator 210 includes a receiver 211 and a transmitter 212. The receiver 211 performs various types of reception under control of the controller 230. The receiver 211 includes an antenna and converts (down-converts) a radio signal received by the antenna into a baseband signal (reception signal) which is then transmitted to the controller 230. The transmitter 212 performs various types of transmission under control of the controller 230. The transmitter 212 includes an antenna and converts (up-converts) the baseband signal (transmission signal) output by the controller 230 into a radio signal which is then transmitted from the antenna.

The network communicator 220 performs wired communication (or wireless communication) with the 5GC 10 and performs wired communication (or wireless communication) with another neighboring gNB 200. The network communicator 220 includes a receiver 221 and a transmitter 222. The receiver 221 performs various types of reception under control of the controller 230. The receiver 221 receives a signal from an external source and outputs the reception signal to the controller 230. The transmitter 222 performs various types of transmission under control of the controller 230. The transmitter 222 transmits the transmission signal output by the controller 230 to an external destination.

The controller 230 performs various types of controls for the gNB 200. The controller 230 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. The processor performs processing of the layers described below. The controller 230 may perform all of the processing and operations in the gNB 200 in each embodiment to be described below.

### Configuration of Relay Node

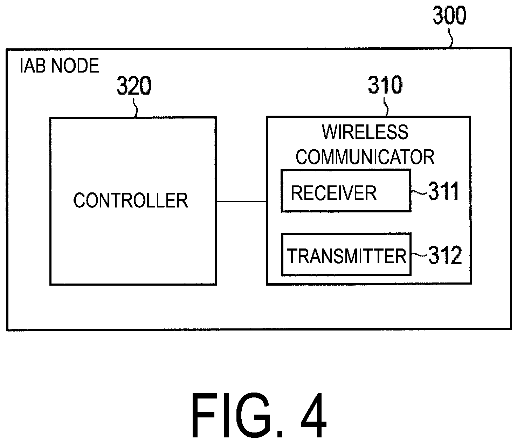

A configuration of the IAB node 300 that is a relay node (or a relay node apparatus. which may be also referred to as a "relay node" below) according to the embodiment will be described. FIG. 4 is a diagram illustrating a configuration example of the IAB node 300. As illustrated in FIG. 4, the IAB node 300 includes a wireless communicator 310 and a controller 320. The IAB node 300 may include a plurality of wireless communicators 310.

The wireless communicator 310 performs wireless communication with the gNB 200 (BH link) and wireless communication with the UE 100 (access link). The wireless communicator 310 for the BH link communication and the wireless communicator 310 for the access link communication may be provided separately.

The wireless communicator 310 includes a receiver 311 and a transmitter 312. The receiver 311 performs various types of reception under control of the controller 320. The receiver 311 includes an antenna and converts (down-converts) a radio signal received by the antenna into a baseband signal (reception signal) which is then transmitted to the controller 320. The transmitter 312 performs various types of transmission under control of the controller 320. The transmitter 312 includes an antenna and converts (up-converts) the baseband signal (transmission signal) output by the controller 320 into a radio signal which is then transmitted from the antenna.

The controller 320 performs various types of controls in the IAB node 300. The controller 320 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. The processor performs processing of the layers described below. The controller 320 may perform all of the processing and operations in the IAB node 300 in each embodiment to be described below.

### Configuration of User Equipment

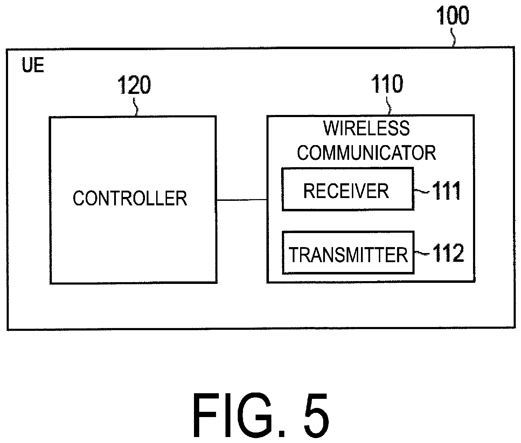

A configuration of the UE 100 that is a user equipment according to the embodiment is described next. FIG. 5 is a diagram illustrating a configuration example of the UE 100. As illustrated in FIG. 5, the UE 100 includes a wireless communicator 110 and a controller 120.

The wireless communicator 110 performs wireless communication in the access link, i.e., wireless communication with the gNB 200 and wireless communication with the IAB node 300. The wireless communicator 110 may also perform wireless communication in a sidelink, i.e., wireless communication with another UE 100. The wireless communicator 110 includes a receiver 111 and a transmitter 112. The receiver 111 performs various types of reception under control of the controller 120. The receiver 111 includes an antenna and converts (down-converts) a radio signal received by the antenna into a baseband signal (reception signal) which is then transmitted to the controller 120. The transmitter 112 performs various types of transmission under control of the controller 120. The transmitter 112 includes an antenna and converts (up-converts) the baseband signal (transmission signal) output by the controller 120 into a radio signal which is then transmitted from the antenna.

The controller 120 performs various types of control in the UE 100. The controller 120 includes at least one memory and at least one processor electrically connected to the memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing. The processor performs processing of the layers described below. The controller 130 may perform all of the processing in the UE 100 in each embodiment described below.

### Configuration of Protocol Stack

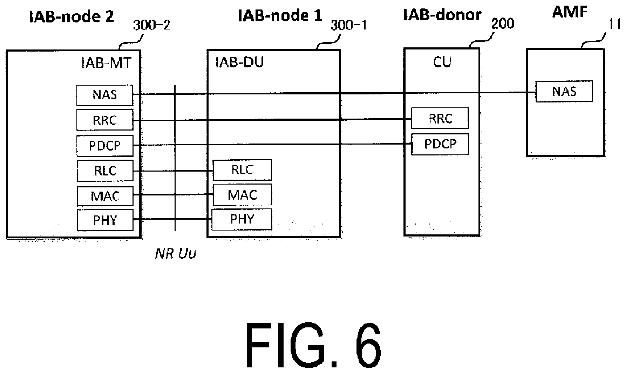

A configuration of a protocol stack according to the embodiment is described next. FIG. 6 is a diagram illustrating an example of a protocol stack related to an RRC connection and a NAS connection of the IAB-MT.

As illustrated in FIG. 6, the IAB-MT of the IAB node 300-2 includes a physical (PHY) layer, a Medium Access Control (MAC) layer, a Radio Link Control (RLC) layer, a Packet Data Convergence Protocol (PDCP) layer, a Radio Resource Control (RRC) layer, and a Non-Access Stratum (NAS) layer.

The PHY layer performs coding and decoding, modulation and demodulation, antenna mapping and demapping, and resource mapping and demapping. Data and control information are transmitted between the PHY layer of the IAB-MT of the IAB node 300-2 and the PHY layer of the IAB-DU of the IAB node 300-1 via a physical channel.

The MAC layer performs priority control of data, retransmission processing through hybrid ARQ (HARQ: Hybrid Automatic Repeat reQuest), a random access procedure, and the like. Data and control information are transmitted between the MAC layer of the IAB-MT of the IAB node 300-2 and the MAC layer of the IAB-DU of the IAB node 300-1 via a transport channel. The MAC layer of the IAB-DU includes a scheduler. The scheduler determines uplink and the downlink transport formats (transport block sizes, Modulation and Coding Schemes (MCSs)) and resource blocks.

The RLC layer transmits data to the RLC layer on the reception side by using functions of the MAC layer and the PHY layer. Data and control information are transmitted between the RLC layer of the IAB-MT of the IAB node 300-2 and the RLC layer of the IAB-DU of the IAB node 300-1 via a logical channel.

The PDCP layer performs header compression and decompression, and encryption and decryption. Data and control information are transmitted between the PDCP layer of the IAB-MT of the IAB node 300-2 and the PDCP layer of the donor node 200 via a radio bearer.

The RRC layer controls a logical channel, a transport channel, and a physical channel according to establishment, re-establishment, and release of a radio bearer. RRC signaling for various configurations is transmitted between the RRC layer of the IAB-MT of the IAB node 300-2 and the RRC layer of the donor node 200. When an RRC connection to the donor node 200 is present, the IAB-MT is in an RRC connected state. When no RRC connection to the donor node 200 is present, the IAB-MT is in an RRC idle state.

The NAS layer which is positioned upper than the RRC layer performs session management, mobility management, and the like. NAS signaling is transmitted between the NAS layer of the IAB-MT of the IAB node 300-2 and the AMF 11.

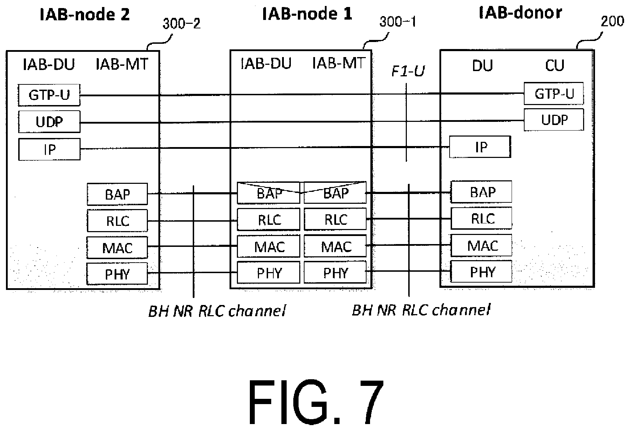

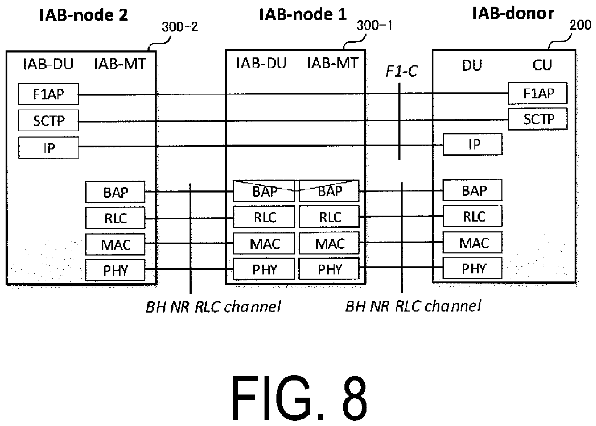

FIG. 7 is a diagram illustrating a protocol stack related to an F1-U protocol. FIG. 8 is a diagram illustrating a protocol stack related to an F1-C protocol. An example is illustrated in which the donor node 200 is divided into a CU and a DU.

As illustrated in FIG. 7, each of the IAB-MT of the IAB node 300-2, the IAB-DU of the IAB node 300-1, the IAB-MT of the IAB node 300-1, and the DU of the donor node 200 includes a Backhaul Adaptation Protocol (BAP) layer as an upper layer of the RLC layer. The BAP layer performs routing processing, and bearer mapping and demapping processing. In the backhaul, the IP layer is transmitted via the BAP layer to allow routing through a plurality of hops.

In each backhaul link, a Protocol Data Unit (PDU) of the BAP layer is transmitted by the backhaul RLC channel (BH NR RLC channel). Configuring a plurality of backhaul RLC channels in each BH link enables the prioritization and Quality of Service (QoS) control of traffic. The association between the BAP PDU and the backhaul RLC channel is executed by the BAP layer of each IAB node 300 and the BAP layer of the donor node 200.

As illustrated in FIG. 8, the protocol stack of the F1-C protocol includes an F1AP layer and an SCTP layer instead of a GTP-U layer and a UDP layer illustrated in FIG. 7.

Note that in the description below, processing or operation performed by the IAB-DU and the IAB-MT of the IAB may be simply described as processing or operation of the "IAB". For example, in the description, transmitting, by the IAB-DU of the IAB node 300-1, a message of the BAP layer to the IAB-MT of the IAB node 300-2 is assumed to correspond to transmitting, by the IAB node 300-1, the message to the IAB node 300-2. Processing or operation of the DU or CU of the donor node 200 may be described simply as processing or operation of the "donor node".

An upstream direction and an uplink (UL) direction may be used without distinction. A downstream direction and a downlink (DL) direction may be used without distinction.

### Scenarios of Routing and Re-Routing

One of functions of the BAP layer includes routing and re-routing. The routing is, for example, to control which IAB node 300 the received packet is forwarded to. The re-routing is, for example, to control to forward the received packet to a destination node (an access IAB node or a donor node) via an alternative path.

In 3GPP, a study has been carried out on how to perform routing or re-routing in a network (or a topology) formed by a plurality of IAB nodes 300.

Regarding routing and re-routing, the following scenarios are present.
(S1) Intra-CU/intra-donor-DU
(S1-1) Routing
(S1-2) Re-Routing
(S2) Intra-CU/inter-donor-DU
(S2-1) Routing
(S2-2) Re-Routing
(S3) Inter-CU
(S3-1) Routing
(S3-2) Re-Routing

With these scenarios being taken into consideration, through a study on a procedure or processing common to each scenario and a study on a procedure or processing specific to each scenario, it is expected to enhance reliability, flexibility, and low latency of packet forwarding in the topology.

Here, each scenario will be described.

### (S1) "Intra-CU/Intra-Donor-DU" Scenario

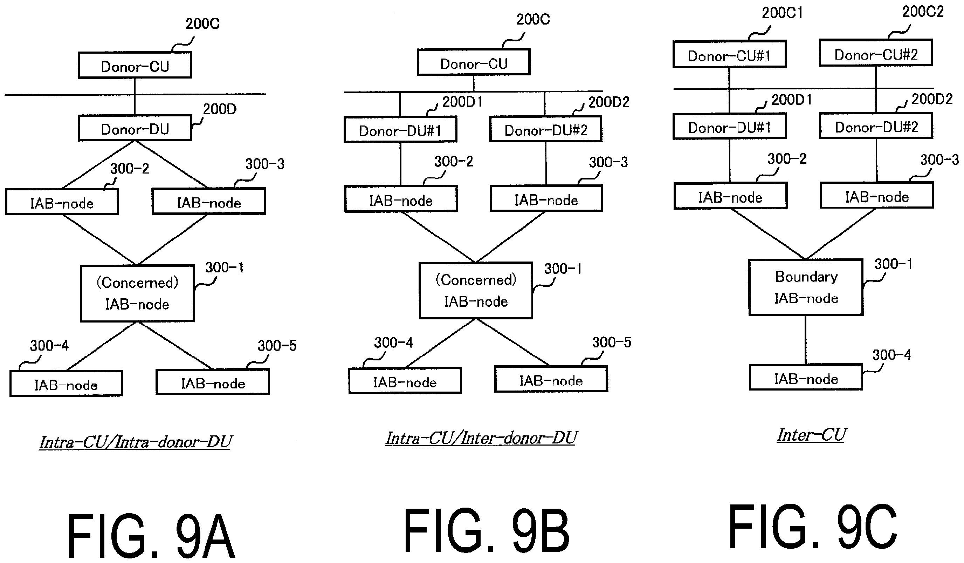

FIG. 9A illustrates a configuration example of a topology in the "intra-CU/intra-donor-DU" scenario.

As illustrated in FIG. 9A, in the scenario, routing and re-routing are performed in the same donor DU (200D) and the same donor CU (200C).

As illustrated in FIG. 9A, between the IAB node 300-1 and the donor DU (200D), two paths are present, i.e., a path via an IAB node 300-2 and a path via an IAB node 300-3. The IAB node 300-1 can forward a packet in an uplink direction to one of the paths. Regarding a packet in a downlink direction as well, the IAB node 300-1 can also forward a packet that has been forwarded in the one of the paths to an IAB node 300-4 or an IAB node 300-5. In routing (S1-1), owing to presence of such two paths, redundancy can be secured for paths.

Re-routing (S1-2) is so-called local re-routing. For example, when the IAB node 300-1 detects a backhaul link radio link failure (BH radio link failure (RLF)) (which may be hereinafter referred to as a "BH RLF") for the IAB node 300-2, regarding a packet in the uplink direction, the IAB node 300-1 can also switch to a path via the IAB node 300-3, which is an alternative path, and perform re-routing.

### (S2) "Intra-CU/Inter-Donor-DU" Scenario

FIG. 9B is a diagram illustrating a configuration example of a topology in the "intra-CU/inter-donor-DU" scenario.

As illustrated in FIG. 9B, in the scenario, two different DUs, i.e., donor DU #1 (200D1) and donor DU #2 (200D2), are connected to one donor node CU (200C). The scenario is a scenario in which, although the donor node CU (200C) is the same, routing and re-routing are performed via different donor DUs.

As illustrated in FIG. 9B, between the IAB node 300-1 and the CU (200C) of the donor node, two paths are present, i.e., a path via the IAB node 300-2 and donor DU #1 (200D1) and a path via the IAB node 300-3 and donor DU #2 (200-D2).

In routing in the uplink direction in the IAB node 300-1, the IAB node 300-1 can forward a packet to the IAB node 300-2 or the IAB node 300-3. In the downlink direction as well, the IAB node 300-1 can forward a packet, which is a packet that has been forwarded in the one of the paths to the IAB node 300-4 or the IAB node 300-5.

In the scenario, although donor node DUs are different, the donor node CU is the same, which thus results in routing in the same topology. Such routing may be referred to as intra-topology routing.

Regarding re-routing in the IAB node 300-1, for example, a case is considered in which a path is switched from a path via the IAB node 300-2 to a path (alternative path) via the IAB node 300-3. In this case, the donor DU being a destination of the packet is changed from donor DU #1 (200D1) to donor DU #2 (200D2). That is, a destination BAP address of the packet is changed. Thus, in 3GPP, performing BAP header rewriting is agreed in the scenario. The BAP header rewriting is to rewrite the BAP header from a previous routing ID to a new routing ID. Note that the routing ID includes a destination BAP address (Destination) and a path identifier (Path ID).

### (S3) "Inter-CU" Scenario

FIG. 9C is a diagram illustrating a configuration example of a topology in the "inter-CU" scenario.

As illustrated in FIG. 9C, in the scenario, two different CUs, i.e., donor CU #1 (200C1) and donor CU #2 (200C2), are provided. Donor DU #1 (200D1) is connected to donor CU #1 (200C1), and donor DU #2 (200D2) is connected to donor CU #2 (200C2).

Generally, different topologies are formed with different donor CUs. That is, a topology (first topology) formed in a path from donor CU #1 (200C1) to the IAB node 300-1 and a topology (second topology) formed in a path from donor CU #2 (200C2) to the IAB node 300-1 may be different topologies. The IAB node 300-1 is located at a boundary between two different topologies. Such an IAB node 300-1 may be referred to as a boundary IAB node (boundary node).

Regarding routing (S3-1) in the scenario, the boundary IAB node 300-1 can forward a packet addressed to donor DU #1 (200D1) to donor DU #2 (200D1) of a different topology. A packet addressed to the IAB node 300-4 can be forwarded via a different topology. For example, a packet transmitted from donor CU #1 (200C1) can be forwarded to the IAB node 300-4 via donor CU #2 (200C2), donor DU #2 (200D2), and the IAB nodes 300-3 and 300-1. In these cases as well, a donor node DU being a destination is changed, and thus in 3GPP, performing BAP header rewriting is agreed.

Such routing being performed between different topologies as described above may be referred to as inter-topology routing.

Regarding re-routing in the scenario, for example, the boundary IAB node 300-1 can forward a packet addressed to donor DU #1 (200D1) via an alternative path on a topology in donor CU #2 (200C2).

Note that, regarding re-routing in the scenario, in 3GPP, the following is agreed: in the boundary IAB node 300-1, the re-routing may be applied to donor CU #2 (200C2) being a target donor node in an RRC reestablishment state with F1 connection with donor CU #1 (200C1) being a source donor node remaining.

In the above, three scenarios have been described. Regarding these three scenarios, it is desirable to reduce procedures specific to each scenario and specify a procedure or processing common to all of the scenarios to the extent possible. This is because employing a common procedure or processing can simplify processing as compared to performing processing specific to each scenario.

In the embodiments, each scenario will be described in the following order.

### First Embodiment Inter-CU Routing

First Operation Example
Second Operation Example
Third Operation Example
Fourth Operation Example
Fifth Operation Example
Sixth Operation Example
Second Embodiment Inter-CU Re-Routing
Third Embodiment Intra-CU/Inter-Donor-DU Re-Routing
First Operation Example
Second Operation Example
Third Operation Example

Note that, in the following description, "BH Routing Configuration" may be referred to as a "routing table". "BH RLC Channel Mapping Configuration" may be referred to as a "mapping table". "Header Rewriting Configuration" may be referred to as a "header rewriting table".

"Inter-CU routing" may be referred to as "inter-topology routing", and "inter-CU re-routing" may be referred to as "inter-topology re-routing".

"Intra-CU/inter-donor-DU re-routing" may be referred to as "inter-donor-DU re-routing".

A layer and an entity may be used without distinction.

### First Embodiment

A first embodiment is an embodiment related to inter-topology routing.

Regarding inter-topology routing, in 3GPP, the following four Open Issues (problems) are discussed.

(Problem 1) "What's the BAP address added in BAP header in the first topology (i.e., the BAP address of ingress data at the boundary node)."

(Problem 2) "How to differentiate the concatenated traffic and non-concatenated traffic."

(Problem 3) "How to determine whether a data should be delivered to upper layer (for downstream)."

(Problem 4) "How to determine whether the BAP header of a data should be rewritten (i.e., whether being routed to another topology or its own topology)."

(Problem 1) is, for example, a problem regarding what BAP address may be set to a header of a BAP packet (BAP PDU) as a target of inter-topology routing by an access IAB node or a donor node DU. For example, when the boundary IAB node 300-1 can differentiate a BAP packet as a target of inter-topology routing and a packet not as the target thereof, based on a set BAP address, the boundary IAB node 300-1 can appropriately perform processing by, for example, performing inter-topology routing and performing regular routing processing.

(Problem 2) is, for example, a problem regarding how the boundary IAB node 300-1 differentiates inter-topology routing (non-cocatenated traffic) and intra-topology routing (concatenated traffic). When the boundary IAB node can appropriately perform such differentiation, the inter-topology routing and the intra-topology routing can be appropriately performed.

(Problem 3) is, for example, a problem regarding how the boundary IAB node determines a packet to be delivered to an upper layer of the boundary IAB node. For example, the boundary IAB node can receive two packets, i.e., a packet from an upstream direction and a packet from a downstream direction. If a packet is a packet addressed to the boundary IAB node in the downstream direction, the boundary IAB node can determine that the boundary IAB node is an access IAB node, and can deliver the packet to an upper layer.

(Problem 4) is, for example, a problem regarding how to rewrite the BAP header. As described above, in the inter-topology routing (for example, FIG. 9C), in a case of a packet in the uplink direction, a destination donor DU is changed to a donor DU with a different topology. Thus, on the condition that the BAP header can be appropriately rewritten, forwarding to a donor DU with a different topology can be performed, and the inter-topology routing can be appropriately performed.

For the four problems described above, in 3GPP, the following two Examples are proposed.
(Example 1): Add the boundary node's BAP address, in the BAP PDU header in the first topology;
(Example 2): Add some proxy/pseudo BAP address of the real destination;

(Example 1) is a proposal to include the BAP address of the boundary IAB node 300-1 in the header of the BAP packet. It is an example in which the packet including the BAP address of the boundary IAB node 300-1 is a packet as a target of inter-topology routing. When the BAP address of the boundary IAB node included in the header of a received packet matches the BAP address of the IAB node, the IAB node can also determine that the packet is the packet as a target of inter-topology routing as the boundary IAB node 300-1.

(Example 2) is a proposal to include a proxy or pseudo BAP address in the header of the BAP packet. In this case as well, when the header of a received BAP packet includes a pseudo BAP address, the IAB node can also determine that the packet is the packet as a target of inter-topology routing.

(Example 1) and (Example 2) only describe the examples as described above, and a specific procedure or processing and the like using these examples are not proposed in 3GPP.

As a first operation example, an operation example regarding overall BAP processing of the inter-topology routing taking account of the four problems described above will be described.

### First Operation Example

The first operation example is a communication control method used in a cellular communication system. Firstly, the transmitter of the BAP layer of the relay node (for example, the IAB node 300-1) receives a packet from the receiver of the BAP layer of the relay node. Secondly, based on header information of the packet, the transmitter determines whether to perform inter-topology routing or perform intra-topology routing for the packet. Here, the relay node is a boundary relay node located at a boundary between topologies.

As described above, in the first operation example, based on the header information of the received packet, whether to perform inter-topology routing or perform intra-topology routing is determined. Thus, in the first operation example, whether to perform inter-topology routing or perform intra-topology routing can be appropriately determined, and for example, solutions to (Problem 1) and (Problem 2) can be provided.

In the first operation example, when the transmitter determines to perform intra-topology routing, the transmitter selects a first routing table for intra-topology routing and a first mapping table for intra-topology routing. On the other hand, when the transmitter determines to perform inter-topology routing, the transmitter selects a second routing table for inter-topology routing and a second mapping table for inter-topology routing.

Thus, in the first operation example, the routing table and the mapping table for inter-topology routing can be appropriately selected. By performing routing processing and mapping processing using these tables, the transmitter can appropriately perform inter-topology routing, and for example, solutions to (Problem 1) and (Problem 2) can be provided.

In the first operation example, when the transmitter selects the second routing table and the second mapping table, the transmitter performs header rewriting processing of rewriting the header of the BAP packet from a previous routing ID to a new routing ID in accordance with a BAP header rewriting table.

Thus, in the first operation example, the inter-topology routing can be appropriately performed by appropriately rewriting the destination BAP address, and for example, a solution to (Problem 4) can be provided.

The first operation example will be described in detail below.

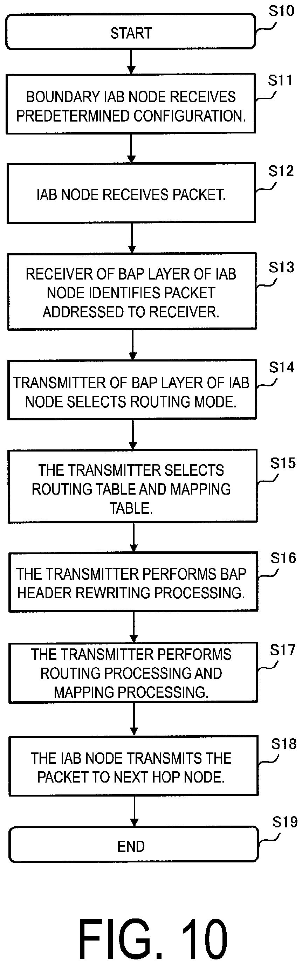

FIG. 10 is a diagram illustrating the first operation example according to the first embodiment.

As illustrated in FIG. 10, in Step S10, the IAB node 300 starts processing.

In Step S11, for the IAB node 300 (here, the boundary IAB node 300-1), predetermined configuration is performed by the donor node 200. The predetermined configuration is to receive tables described below. The tables are the first routing table for intra-topology routing, the second mapping table for intra-topology routing, the second routing table for inter-topology routing, the second mapping table for inter-topology routing, and the BAP header rewriting table.

In Step S12, the IAB node 300 receives packets (BAP PDU packets).

In Step S13, the receiver of the BAP layer of the IAB node 300 identifies a packet in the downstream direction or the upstream direction addressed to the receiver regarding the received packets. Then, the receiver outputs the packet addressed to the receiver to an upper layer, and outputs other packets to the transmitter of the BAP layer of the IAB node 300.

The receiver identifies the packet addressed to the receiver as follows, for example.

Firstly, when the destination in the header of the received packet matches the BAP address of its IAB node 300-1, the receiver determines that the packet is a candidate packet.

Secondly, when (Example 1) applies to the candidate packet, the receiver identifies that the packet is the packet addressed to the receiver, using the path ID included in the header of the candidate packet. Specifically, when the path ID included in the header of the packet is different from a predetermined path ID (a path ID for an inter-topology routing packet), the receiver identifies that the packet is the packet addressed to the receiver. Note that the predetermined path ID is configured by the donor node 200, for example. When (Example 1) applies to the candidate packet, the packet may be identified as the packet addressed thereto by using an identifier indicating that the packet is the packet as a target of inter-topology routing. Specifically, when the identifier included in the BAP header of the packet is "0" (not the packet as a target of inter-topology routing), the receiver identifies that the candidate packet is the packet addressed to the receiver.

Thirdly, when (Example 2) applies to the candidate packet, the receiver identifies that the candidate packet is the packet addressed to the receiver. In other words, when (Example 2) applies, the candidate packet that has the destination of the header matching the BAP address of the IAB node 300 may be the packet addressed to the IAB node 300, as the destination of the candidate packet matches the BAP address of the IAB node 300 and thus the address being not a pseudo BAP address can be confirmed.

When the receiver identifies that the candidate packet is the packet addressed to the receiver, the receiver removes the BAP header and outputs the packet to an upper layer. The packet addressed to the receiver is a packet to be transmitted to the UE 100 by the IAB node 300-1 as an access IAB node. Thus, in an upper layer, such processing to transmit the packet to the UE 100 is performed.

On the other hand, the receiver outputs the packet identified as not being the packet addressed to the receiver out of the received packets to the transmitter of the BAP layer.

In Step S14, the transmitter selects a routing mode of the packet received from the receiver. The routing mode includes intra-topology routing and inter-topology routing.

A determination method is performed as follows, for example. That is, when at least one of the following applies regarding the header information of the packet, the transmitter determines that the packet is the packet as a target of inter-topology routing (inter-topology routing mode), otherwise the transmitter determines the intra-topology routing mode (intra-topology routing mode).
M1: a case of matching a specific routing ID indicating inter-topology routing, or
M2: a case of matching a specific path ID indicating inter-topology routing, or
M3: a case of matching a specific BAP address (for example, Proposal (2)) indicating inter-topology routing, or
M4: when an identifier indicating whether forwarding is inter-topology forwarding indicates inter-topology forwarding (for example, " 1"), or
M5: when the destination BAP address of the BAP packet matches the BAP address associated with a topology different from a specified BAP address, or
M6: when routing mode information is provided from the receiver for each packet, and the information indicates inter-topology routing (or intra-topology routing). In the receiver, the routing mode may be determined using M1 to M5 above.

Details of M5 above will be described in a second operation example.

The transmitter may store the packets in different buffers, depending on determination results. For example, when the transmitter determines that the packet is the packet as a target of inter-topology routing, the transmitter stores the packet in a buffer for inter-topology routing. For example, when the transmitter determines that the packet is the packet as a target of intra-topology routing, the transmitter stores the packet in a buffer for intra-topology routing.

In Step S15, the transmitter selects a routing table and a mapping table. By default, the transmitter may select the first routing table for intra-topology routing.

Then, in Step S14, when the transmitter determines that the packet is the packet as a target of inter-topology routing, and the second routing table for inter-topology routing is configured, the transmitter selects the second routing table. When the second mapping table is configured, the transmitter selects the second mapping table.

On the other hand, when the transmitter determines that the packet is the packet as a target of inter-topology routing, and the second routing table is not configured, the IAB node 300 considers that it is not the boundary IAB node 300-1 and selects the first routing table for intra-topology routing. That is, this is when the transmitter determines that the packet is the packet as a target of inter-topology routing due to matching with a specific routing ID or the like, but the second routing table is not configured in the IAB node 300. For example, a case of the IAB nodes (the IAB node 300-2 and the IAB node 300-3) being located in the middle between the donor DU and the boundary IAB node 300-1 falls under this case. Such an IAB node recognizes that the packet is the packet as a target of inter-topology routing but does not receive the configuration of the second routing table, and thus does not execute inter-topology routing for the packet. In this case, the transmitter selects the first routing table.

In the same and/or similar manner, when the second mapping table is not configured, the transmitter selects the first mapping table.

On the other hand, in Step S15, when the transmitter determines that the packet is the packet as a target of intra-topology routing, the transmitter selects the first routing table. The transmitter selects the second mapping table.

Note that the transmitter may store the packet in a buffer different for each routing table. When the transmitter selects the first routing table, the transmitter stores the packet in a buffer for the first routing table. When the transmitter selects the second routing table, the transmitter stores the packet in a buffer for the second routing table.

In Step S16, the transmitter performs BAP header rewriting processing for the packet. That is, when the transmitter performs inter-topology routing for the packet (or selects the second routing table and the second mapping table in Step S15), the transmitter performs the BAP header rewriting processing.

The transmitter performs the BAP header rewriting processing, using the header rewriting table. The BAP header rewriting table includes entries including a previous routing ID and a new routing ID. Specifically, when an entry including a previous routing ID matching the routing ID included in the header of the packet is present in the header rewriting table, the transmitter rewrites the routing ID included in the header of the packet to a new routing ID of the entry.

Note that, when the entry including the previous routing ID matching the routing ID included in the header of the packet is not present in the header rewriting table, the transmitter may determine that the packet is not the packet as a target of inter-topology routing. In this case, the transmitter does not perform the BAP header rewriting processing. Alternatively, in this case, the transmitter may perform processing such as re-routing processing. That is, when the entry including a BAP address part of the previous routing ID matching the destination of the packet is present in the header rewriting table, the transmitter may rewrite the routing ID of the BAP header of the packet to a new routing ID of the entry.

In Step S17, the transmitter performs the routing processing and the mapping processing for the packet.

Firstly, the transmitter performs the routing processing, using the routing table (the first routing table or the second routing table) selected in Step S15. Specifically, when the entry matching the destination and the path ID included in the header of the packet is present in the selected routing table, and an egress backhaul link (egress BH link) corresponding to a next hop BAP address of the entry is available, the transmitter selects the egress backhaul link.

Here, when the first routing table is used, it means intra-topology routing. That is, in a case of intra-topology routing, the routing processing is performed for both the packet in the downlink direction and the packet in the uplink direction, using the first routing table.

On the other hand, when the second routing table is used, it means inter-topology routing. The IAB node 300-1 performs the inter-topology routing processing for the received packet as the boundary IAB node. For example, the IAB node 300-1 performs the routing processing to arrange the packet addressed to donor DU #1 (200D1) to be a packet addressed to donor DU #1 (200D2).

Secondly, the transmitter performs the mapping processing, using the mapping table (the first mapping table or the second mapping table) selected in Step S15. Specifically, when an entry matching an ingress backhaul RLC channel (ingress BH RLC channel) of the packet, an ingress backhaul link (ingress BH link) of the packet, and the egress backhaul link selected in the mapping processing is present in the selected mapping table, the transmitter selects an egress backhaul RLC channel (egress BH RLC channel) of the entry.

The transmitter outputs the packet to the selected egress backhaul RLC channel of the selected egress backhaul link.

In Step S18, the IAB node 300 transmits the packet to the next hop node. In this case, the IAB node 300 (boundary IAB node 300-1) transmits the packet to donor DU #2 (200D2), using the inter-topology routing, for example. Alternatively, the IAB node 300 transmits the packet to donor DU #1 (200D1), using the intra-topology routing, for example.

In Step S19, the IAB node 300 ends the series of processing.

### Summary of First Operation Example

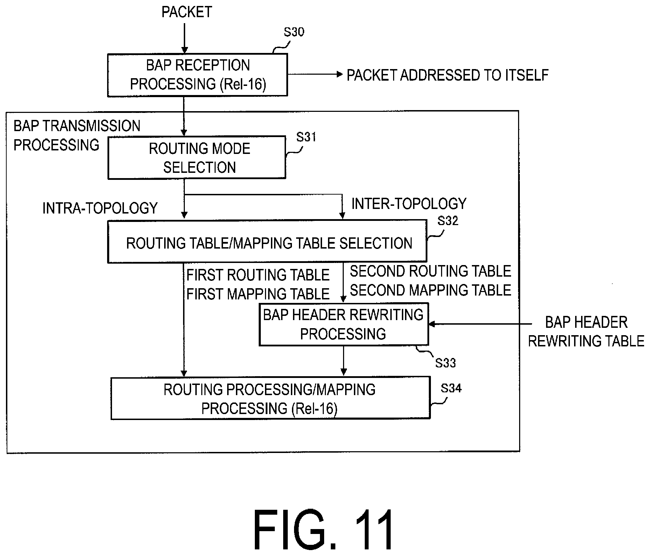

FIG. 11 is a diagram of a summary of the first operation example according to the first embodiment.

In FIG. 11, BAP reception processing (Step S30) corresponds to Step S11 to Step S13 in FIG. 10. In FIG. 11, routing mode selection (Step S31) corresponds to Step S14 in FIG. 10. In FIG. 11, routing table/mapping table selection (Step S32) corresponds to Step S15 in FIG. 10. In FIG. 11, BAP header rewriting processing (Step S33) corresponds to Step S16 in FIG. 10. In FIG. 11, routing processing/mapping processing (Step S34) corresponds to Step S 17 in FIG. 10.

### Variations of First Operation Example

### Variation 1

The first operation example may be executed when the second routing table, the second mapping table, and the header rewriting table are configured. That is, when the second routing table, the second mapping table, or the header rewriting table is not configured, the first operation example need not be performed.

### Variation 2

In the first operation example, an example of the "inter-topology routing" scenario (S3-1) is described. Performing BAP header rewriting also in the "intra-CU/inter-donor-CU re-routing" scenario (S2-2) is agreed in 3GPP.

Thus, at least a part of the first operation example may be applied to scenarios other than the "inter-topology routing" scenario. For example, when it is applied to the "intra-CU/inter-donor-DU re-routing" scenario (S2-2) or the "intra-CU/intra-donor-DU re-routing" scenario (S1-2), operation may be performed with "intra-topology or inter-topology" in the first operation example being respectively replaced with "regular routing or inter-donor-DU re-routing" or the like.

### Variation 3

In the first operation example, regarding the routing tables, an example using two tables, i.e., the first routing table for intra-topology routing and the second routing table for inter-topology routing, is described. For example, regarding the routing tables, three or more routing tables may be configured.

For example, in FIG. 9C, a case is assumed in which, when the IAB node 300-1 is under donor CU #1 (200C1) (which may be hereinafter referred to as a "first donor"), inter-topology routing for donor CU #1 (200C2) (which may be hereinafter referred to as a "second donor") is performed. In the topology after the inter-topology routing, in the downstream direction, the first donor manages the routing ID, and in the upstream direction, the second donor manages the routing ID. In this case, when no negotiation is performed between the first donor and the second donor, the same routing ID may be used.

For example, a case is assumed in which after the inter-topology routing, the IAB node 300-1 receives a packet from a lower node, and performs routing processing. In this case, the IAB node 300-1 selects an entry matching the routing ID of the packet from the routing table. However, when the same routing ID is present in the routing table in the downstream direction managed by the first donor and the routing table in the upstream direction managed by the second donor, the IAB node 300-1 may search the routing table in the downstream direction for the entry having the same routing ID. In this case, the IAB node 300-1 may forward the packet received from the lower node to the lower node again.

In Variation 3, regarding the inter-topology routing tables, two routing tables, i.e., an inter-topology routing table for the upstream and an inter-topology routing table for the downstream, are configured for the IAB node 300-1. Regarding the intra-topology routing tables, an intra-topology routing table for the upstream and an intra-topology routing table for the downstream are configured for the IAB node 300-1.

For example, the IAB node 300-1 determines that the packet received from the lower node is in the upstream direction, and performs the routing processing using an inter-topology table or an intra-topology table associated with the upstream direction.

Thus, even when the same routing ID is used between topologies, the IAB node 300-1 can appropriately forward the packet.

### Variation 4

In the first operation example, the BAP header rewriting processing is performed after the routing table/mapping table selection (Step S32) and before the routing processing/mapping processing (Step S34).

Variation 4 is an example in which the BAP header rewriting processing is performed at the beginning of BAP transmission processing.

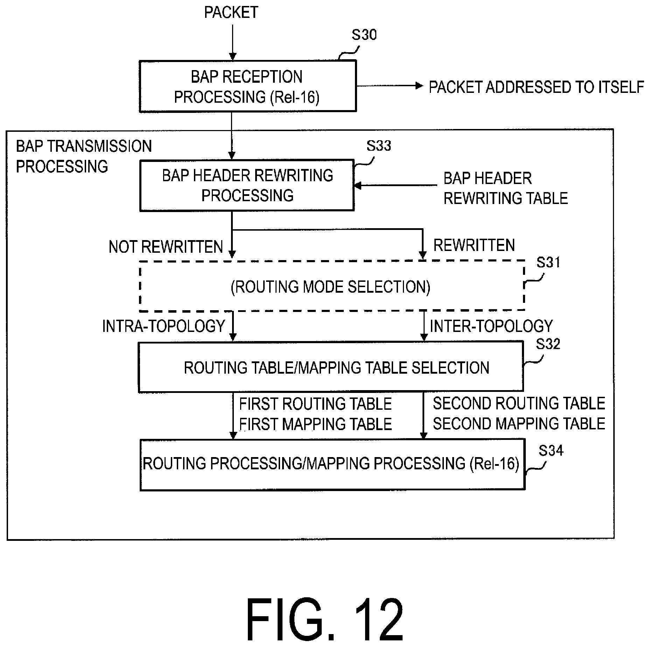

FIG. 12 is a diagram illustrating an operation example according to Variation 4 of the first embodiment.

As illustrated in FIG. 12, the BAP transmission processing is performed in the following order. The order is the BAP header rewriting processing (Step S33), the routing mode selection (Step S31), the routing table/mapping table selection (Step S32), and the routing processing/mapping processing (Step S34).

In Step S33, the transmitter performs the BAP header rewriting processing. The transmitter performs the following processing, for example.

That is, when the transmitter of the BAP layer of the IAB node 300-1 receives a BAP packet (BAP PDU) from the receiver of the BAP layer of the IAB node 300-1, in Step S33, the transmitter performs the BAP header rewriting processing. Specifically, the transmitter performs the following processing,

Firstly, the transmitter determines whether an entry including a previous routing ID matching the routing ID included in the header of the packet is present in the header rewriting table.

When the entry is present in the header rewriting table, the transmitter rewrites the routing ID included in the BAP header of the packet to a new routing ID in the entry. On the other hand, when the entry is not present in the header rewriting table, the transmitter does not perform the BAP header rewriting. In this case, the transmitter may determine that the packet is not a target of inter-topology routing. Alternatively, in this case, the transmitter may perform re-routing processing. That is, when the entry including the BAP address of the previous routing ID matching the destination in the header of the packet is present in the header rewriting table, the routing ID of the BAP header is rewritten to a new routing ID included in the entry.

Secondly, when the transmitter performs the BAP header rewriting, the transmitter may store the packet in a buffer for the packet that has been subjected to the BAP header rewriting. On the other hand, when the transmitter does not perform the BAP header rewriting, the transmitter may store the packet in a buffer for the packet whose BAP header has not yet been rewritten.

Subsequently, in Step S31, the transmitter performs the routing mode selection (Step S31). The transmitter performs the following processing, for example. That is, when the transmitter performs the BAP header rewriting, the transmitter may determine that the packet is the packet as a target of inter-topology routing. When the transmitter does not perform the BAP header rewriting, the transmitter may determine that the packet is the packet as a target of intra-topology routing. Step S31 may be omitted.

Subsequently, in Step S32, the transmitter selects the routing table/mapping table. The transmitter performs the following processing, for example. That is, the transmitter may select the second routing table and the second mapping table associated with the new routing ID selected at the time of the BAP header rewriting. In this case, association information between the new routing ID and each table is configured for the IAB node 300-1 from the donor node 200.

Subsequently, in Step S34, the transmitter performs the routing processing and the mapping processing. The two processing operations are the same as and/or similar to those of the first operation example.

In the first operation example, an example using two routing tables (and two mapping tables) to be applied to an intra-topology scenario and an inter-topology scenario is described, but this is not restrictive. One routing table (and one mapping table) used in both of the intra-topology scenario and the inter-topology scenario may be defined. In this case, each entry in the table may include information indicating whether it is the entry to be applied to the intra-topology scenario or the entry to be applied to the inter-topology scenario. The information may be information indicating whether application is performed for the packet that has been subjected to the BAP header rewriting or application is performed for the packet that has not been subjected to the BAP header rewriting. Alternatively, the information may be an identifier indicating a topology as a transmission destination of the packet (or a donor that manages the topology). Alternatively, the information may be information indicating whether application is to be performed for an upstream packet or application is to be performed for a downstream packet. The IAB node 300-1 regards only the entry matching a specified routing mode (or scenario) as a target (candidate) of the routing processing (and the mapping processing).

### Second Operation Example

A second operation example according to the first embodiment will be described.

The second operation example is also an operation example in which the IAB node 300-1 identifies whether a received packet is the packet as a target of inter-topology routing.

As illustrated in FIG. 9C, the boundary IAB node 300-1 is connected to two topologies. It is assumed that the respective topologies are managed by respective donor nodes (donor CU #1 (200C1) and donor CU #2 (200C2)). Thus, the BAP address of the boundary IAB node 300-1 includes two BAP addresses, i.e., the BAP address managed by donor CU # (200C1) and the BAP address managed by donor CU #2 (200C). Note that it is a principle that the BAP address is unique in the topology.

As described in (Example 2) above, an example of assigning a pseudo BAP address (proxy/pseudo BAP Address) to the boundary IAB node 300-1 is proposed as a method for identifying the packet as a target of inter-topology routing. In this case, the boundary IAB node 300-1 may be assigned two pseudo BAP addresses, i.e., the pseudo BAP address assigned by donor CU #1 (200C1) and the pseudo BAP address assigned by donor CU #2 (200C2). As described above, as the BAP addresses of the boundary IAB node 300-1, the boundary IAB node 300-1 is assigned two of its own BAP addresses by these two donors.

Thus, the boundary IAB node 300-1 may be assigned four BAP addresses. Identifying the packet as a target of inter-topology routing using these four BAP addresses may involve complicated processing.

To select the BAP address, the BAP layer may also determine from which topology the packet has arrived.

In the second operation example, the IAB node 300-1 identifies a topology of the arrived packet, and identifies the BAP address associated with the topology as the BAP address of the IAB node 300-1, and performs the BAP reception processing and the BAP transmission processing in a manner the same as and/or similar to the first operation example, using the identified BAP address.

That is, firstly, the relay node (for example, the IAB node 300-1) is configured with the BAP address of the relay node in each topology from the donor node (for example, the donor node 200). Secondly, the relay node is configured with association information for associating the topology and the ingress backhaul link and/or association information for associating the topology and the ingress backhaul RLC channel from the donor node. Thirdly, the BAP layer of the relay node receives a packet. Fourthly, based on the ingress backhaul link and/or the ingress backhaul RLC channel of the packet, the BAP layer identifies the topology to which the packet belongs, and identifies the BAP address associated with the identified topology as the BAP address of the relay node. Here, the relay node is the boundary relay node (for example, the boundary IAB node 300-1) located at a boundary between topologies.

Thus, for example, only the use of two BAP addresses associated with each topology without the use of four BAP addresses suffices, and accordingly the processing can be simplified as compared to when four BAP addresses are used.

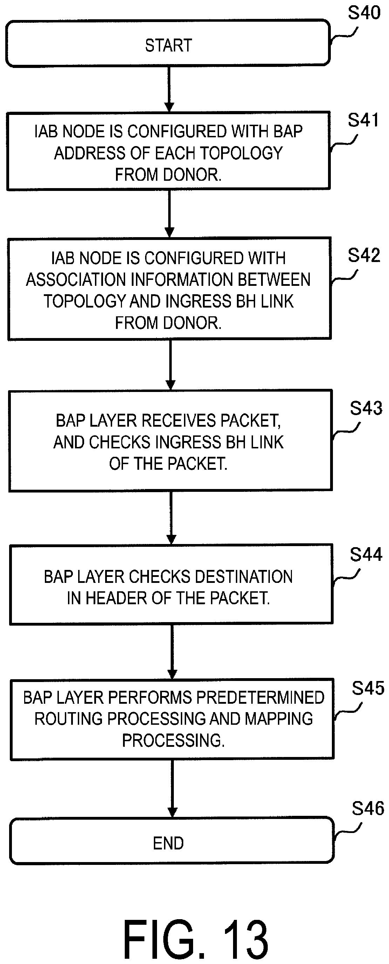

FIG. 13 is a diagram illustrating the second operation example according to the first embodiment.

Here, it is assumed that the IAB node (here, the boundary IAB node) 300-1 has connection with two topologies. For example, as illustrated in FIG. 9C, the boundary IAB node 300-1 has connection with donor CU #1 (200C1) and donor CU #2 (200C2). In this case, a relationship between the boundary IAB node 300-1 and the two donor nodes may be a relationship between a donor node having F1AP connection with the boundary IAB node 300-1 and a donor node not having F1AP connection with the boundary IAB node 300-1. The relationship may be a relationship between a donor node having first (main or master) F1AP connection with the boundary IAB node 300-1 and a donor node having second (secondary) F1AP connection with the boundary IAB node 300-1. The relationship may be a relationship between a donor node having RRC connection with the boundary IAB node 300-1 and a donor node not having RRC connection with the boundary IAB node 300-1. The relationship may be a relationship between a donor node having master cell group (MCG) connection with the boundary IAB node 300-1 and a donor node having secondary cell group (SCG) connection with the boundary IAB node 300-1.

As illustrated in FIG. 13, in Step S40, the IAB node 300-1 starts processing.

In Step S41, the IAB node 300-1 is configured with the BAP address of each topology from the donor node. The BAP address is configured using F1AP or RRC.

For example, in the IAB node 300-1 of FIG. 9C, when the F1AP connection or the RRC connection has only connection with donor CU #1 (200C1), the BAP address in donor CU #2 (200C2) is reported from donor CU #2 (200C2) to donor CU #1 (200C1). Then, the BAP address is configured from donor CU #1 (200C1) to the IAB node 300-1. Through such a path, the BAP address in the topology on donor CU #2 (200C2) side may be configured.

When both of the F1AP connection and the RRC connection are present for each donor node, donor CU #1 (200C1) configures the BAP address in the topology managed by donor CU #1 (200C1) for the IAB node 300-1, using an F1AP message or an RRC message. Donor CU #2 (200C2) also configures the BAP address in the topology managed by donor CU #2 (200C2) for the IAB node 300-1, using an F1AP message or an RRC message.

The BAP address may be configured in association with correspondence with the topology (or the donor node). For example, a first BAP address may be configured in association with the first topology (for example, the topology managed by donor CU #1 (200C1)) and a second BAP address may be configured in association with the second topology (for example, the topology managed by donor CU #2 (200C2)).

The IAB node 300-1 associates the BAP address with each topology (or donor node) and stores the BAP address in a buffer.

In Step S42, the IAB node 300-1 is configured with association information between the topology and the ingress backhaul link (ingress BH link) (and/or the ingress backhaul RLC channel (ingress BH RLC channel)) from the donor node.

For example, the association information is configured, which indicates that the first topology is associated with a first ingress backhaul link (and/or a first ingress backhaul RLC channel) and the second topology is associated with a second ingress backhaul (and/or a second ingress backhaul RLC channel). Alternatively, the association information may be configured regarding only the second ingress backhaul link (and/or the second ingress backhaul RLC channel) associated with the second topology. In Rel-16, all of the ingress backhaul links (and/or the ingress backhaul RLC channels) belong to the first topology, and thus when the association information is not present, the IAB node 300-1 can determine that the topology is the first topology, whereas when the association information is present, the IAB node 300-1 can determine that the topology is the second topology.

As described above, owing to the association information in Step S42, the IAB node 300-1 can identify the topology to which the packet belongs from an ingress source of the packet.

In Step S43, the BAP layer of the IAB node 300-1 receives the packet. Then, the BAP layer checks the ingress backhaul link (and/or the ingress backhaul RLC channel) of the packet. That is, based on the ingress backhaul link (and/or the ingress backhaul RLC channel) of the packet, the BAP layer checks the topology associated with the ingress backhaul link (and/or the ingress backhaul RLC channel).

Firstly, when the ingress backhaul link (and/or the ingress backhaul RLC channel) is associated with the first topology, the BAP layer identifies the BAP address associated with the first topology as the BAP address (for example, the first BAP address) of the BAP layer. The BAP address associated with each topology is configured in Step S41.

Secondly, when the ingress backhaul link (and/or the ingress backhaul RLC channel) is associated with the second topology, the BAP layer identifies the BAP address associated with the second topology as the BAP address (for example, the second BAP address) of the BAP layer.

In Step S43, the BAP layer identifies the topology to which the packet belongs from an ingress source of the received packet, and identifies the BAP address associated with (or corresponding to) the identified topology.

In Step S44, the BAP layer checks the destination included in the header of the packet.

Firstly, when the destination matches the BAP address of the BAP layer identified in Step S43, the BAP layer determines that the packet is the packet addressed to the BAP layer, and outputs the packet to an upper layer. That is, when the destination matches the BAP address (for example, the first BAP address) thereof identified in Step S43, in a manner the same as and/or similar to the first operation example, it means that the packet is the packet in the downstream direction in the first topology and the IAB node 300-1 is an access IAB node. In such a case, the IAB node 300-1 transmits the packet to the UE 100 under the IAB node 300-1, and thus the BAP layer outputs the packet to an upper layer.

Secondly, when the destination does not match the BAP address thereof identified in Step S43, the BAP layer determines that this is a target of routing. The receiver of the BAP layer outputs the packet determined to be a target of routing to the transmitter of the BAP layer.

The BAP layer performs the following processing for the packet as a target of routing.

Firstly, when the destination matches the BAP address associated with the second topology identified in Step S43 (or the BAP address for inter-topology routing), the BAP layer may determine that the packet is the packet as a target of inter-topology routing. That is, when the destination BAP address of the packet matches the BAP address (for example, the second BAP address) associated with the topology (for example, the second topology) different from the identified BAP address (for example, the first BAP address), the BAP layer determines that the packet is the packet as a target of inter-topology routing. After the determination, the BAP layer may perform the BAP header rewriting processing for the packet, in a manner the same as and/or similar to the first operation example. Alternatively, when Step S44 is performed in the receiver of the BAP layer, the receiver may output the packet to the transmitter of the BAP layer as a target of inter-topology routing (or by adding information indicating the target).

Secondly, when the destination does not match the BAP address associated with the second topology identified in Step S43 (or the BAP address for inter-topology routing), the BAP layer may determine that the packet is a target of intra-topology routing. The BAP layer does not perform the BAP header rewriting processing for the packet. Alternatively, when Step S44 is performed in the receiver of the BAP layer, the receiver may output the packet to the transmitter of the BAP layer as a target of intra-topology routing (or by adding information indicating the target).

In Step S45, the BAP layer performs the routing processing and the mapping processing, in a manner the same as and/or similar to the first operation example. The BAP layer may perform the routing processing and the mapping processing for the packet determined to be a target of inter-topology routing, using the second routing table and the second mapping table. The BAP layer may perform the routing processing and the mapping processing for the packet determined to be a target of inter-topology routing, using the first routing table and the first mapping table.

In Step S46, the IAB node 300-1 ends the series of processing.

### Third Operation Example

A third operation example of the first embodiment will be described.

In 3GPP, including an identifier indicating whether the packet is the BAP packet as a target of inter-topology routing in the header of the BAP packet is proposed.

For example, in FIG. 9C, when the boundary IAB node 300-1 receives the packet from a lower node, based on the identifier included in the header of the packet, the boundary IAB node 300-1 can identify that the packet is the packet as a target of inter-topology routing.

On the other hand, the IAB node 300-3 that has received the packet can also determine that the packet is the packet as a target of inter-topology routing, based on the identifier. Thus, the IAB node 300-3 may perform erroneous operation.

In the third operation example, after the IAB node (boundary IAB node) 300-1 performs inter-topology routing, the IAB node rewrites the identifier to a value (for example, "0") indicating that the packet is not the packet as a target of inter-topology routing.

Specifically, in the header rewriting processing, the identifier indicating inter-topology routing included in the header information of the BAP packet is rewritten from "1" to "0".

Thus, the IAB node 300-3 that has received the packet that has been subjected to inter-topology routing performs inter-topology routing for the packet less frequently, and can reduce erroneous operation.

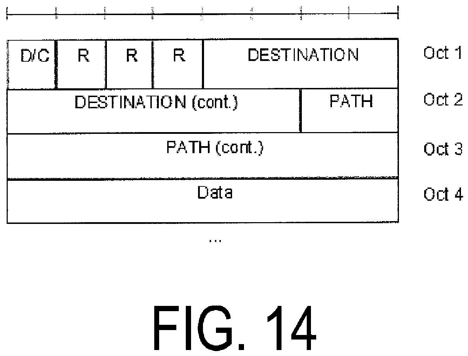

FIG. 14 is a diagram illustrating a configuration example of a BAP Data PDU packet according to the first embodiment. The identifier indicating that the packet is the packet as a target of inter-topology routing may be included in at least one of three reserved fields ("R").

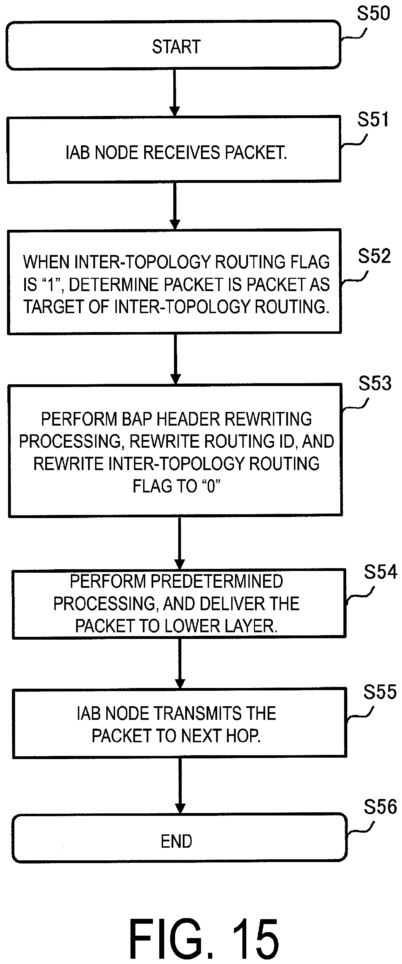

FIG. 15 is a diagram illustrating the third operation example according to the first embodiment.

In Step S50, the boundary IAB node 300-1 starts processing.

In Step S51, the boundary IAB node 300-1 receives a BAP packet.

In Step S52, the BAP layer of the boundary IAB node 300-1 checks the identifier included in the header of the packet. When the identifier is "1", which indicates performing of inter-topology routing, the BAP layer determines that the received packet is the packet as a target of inter-topology routing. Note that, when the identifier is "0", the BAP layer determines that the packet is not the packet as a target of inter-topology routing. In the following, description continues on the assumption that the packet is the packet as a target of inter-topology routing.

In Step S53, the BAP layer performs BAP header rewriting processing on the packet. In a manner the same as and/or similar to the first operation example and the like, when an entry including a previous routing ID matching the routing ID included in the header of the packet is present in the header rewriting table, the BAP layer rewrites the routing ID included in the header of the packet to a new routing ID included in the entry. Then, the BAP layer rewrites the identifier from the value "1" indicating performing of inter-topology routing to the value "0" indicating no performing of inter-topology routing. Alternatively, the BAP layer writes "0" in a field of the BAP header that includes the identifier.

In Step S54, the BAP layer performs the routing processing and the mapping processing, and outputs the packet to a lower layer, in a manner the same as and/or similar to the first operation example.

In Step S55, the boundary IAB node 300-1 transmits the packet to the next hop node.

In Step S56, the boundary IAB node 300-1 ends the series of processing.

### Fourth Operation Example

A fourth operation example of the first embodiment will be described.

In the first operation example, when the BAP layer selects the routing table, the BAP layer selects the first routing table or the second routing table.

However, the BAP layer may not be able to identify which routing table is the first routing table or the second routing table.

The fourth operation example is an example in which the routing tables each are configured to include identifiers for identifying two routing tables. This is an example in which, regarding the mapping tables as well, in the same and/or similar manner, the mapping tables each include identifiers for identifying the first mapping table and the second mapping table.

Specifically, the first routing table and the second routing table include first identification information for identifying the first routing table and the second routing table, and the first mapping table and the second mapping table include second identification information for identifying the first mapping table and the second mapping table.

Here, in the first operation example, M1 to M6 are described as an identification method for identifying that the packet is the packet as a target of inter-topology routing.

The packet can be identified as the packet as a target of inter-topology routing by using a direction of the packet. For example, in FIG. 9C, negotiation is not performed between donor nodes, and thus the routing ID in the downstream direction used in the topology of donor CU #1 (200C1) and the routing ID in the upstream direction used in the topology of donor CU #2 (200C2) may be the same. In view of this, the tables each are configured to include identifiers indicating directions. On the condition that the IAB node 300-2 is able to check that the direction of the received packet is the upstream direction, the IAB node 300-2 can recognize that it is a target of inter-topology routing, and based on the identifier, the IAB node 300-2 can use the second routing table and the second mapping table used in the upstream direction.

In view of this, the following five identifiers are targets to be determined.
T1: a routing ID
T2: a path ID
T3: a BAP address
T4: a flag value (for example, " 1") used by an identifier indicating whether forwarding is inter-topology forwarding to indicate inter-topology forwarding
T5: an upstream or downstream

For example, regarding the routing ID, when the table includes a specific routing ID indicating inter-topology routing, the IAB node 300-1 can determine that the table is the second routing table.

On the other hand, for example, when the table does not include the specific routing ID indicating inter-topology routing (or the table includes the routing ID indicating intra-topology routing), the IAB node 300-1 can determine that the table is the first routing table.

The same and/or similar operation applies regarding T2 to T4.

Note that, regarding T5, for example, when the packet is the packet in the upstream direction, the IAB node 300-1 may determine that the table including the identifier indicating the upstream direction is the second routing table. For example, when the packet is the packet in the downstream direction, the IAB node 300-1 may determine that the table including the identifier indicating the downstream direction is the first routing table.

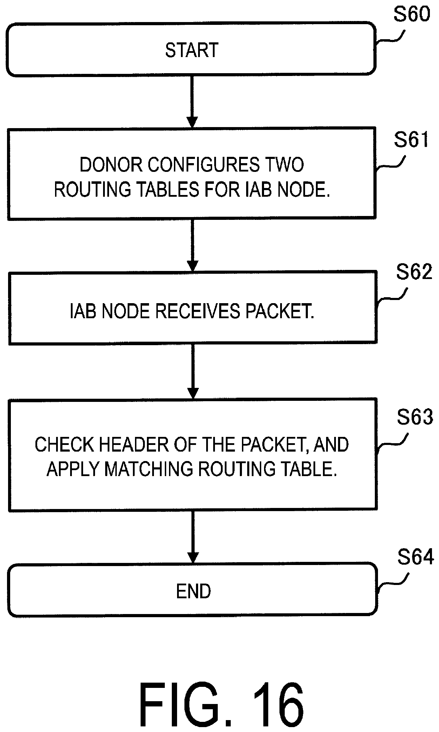

FIG. 16 is a diagram illustrating the fourth operation example according to the first embodiment.

As illustrated in FIG. 16, in Step S60, the donor node starts processing.

In Step S61, the donor node configures the first routing table for inter-topology routing and the second routing table for intra-topology routing for the IAB node 300-1.

The two tables respectively include identifiers for identifying the first routing table and the second routing table.

In Step S62, the IAB node 300-1 receives a packet.

In Step S63, the BAP layer of the IAB node 300-1 checks the header of the packet, and determines the routing table to be applied. For example, when information included in the header matches a specific identifier indicating inter-topology routing, the BAP layer determines that the routing table including the identifier is the second routing table. On the other hand, when the information included in the header does not correspond to the specific identifier indicating inter-topology routing (or the information corresponds to a specific identifier indicating intra-topology routing), the BAP layer determines that the routing table not including the identifier is the first routing table. The BAP layer performs routing processing, using the determined routing table.

Then, in Step S64, the IAB node 300-1 ends the series of processing.

Variation of Fourth Operation Example

The fourth operation example describes an example in which, regarding the routing tables, two routing tables, i.e., the first routing table and the second routing table, are used. For example, three or more routing tables may be used. For example, three or more multi-connections (multi-connectivity) are assumed regarding the boundary IAB node 300-1, and thus one routing table may be used for each of the connections.

### Fifth Operation Example

A fifth operation example in the first embodiment will be described.

The fourth operation example described above describes an example in which the table to be applied is identified based on the direction of the packet.

However, in 3GPP, how to identify the direction of the packet has not been discussed.

The fifth operation example will describe an operation example for identifying the direction as to whether the received packet is in the downstream direction or the received packet is in the upstream direction.

Specifically, firstly, the receiver (for example, the receiver of the BAP layer) identifies whether the direction of the received BAP packet is the downstream direction or the upstream direction. Secondly, when the first routing table and the second routing table are present for each direction of the BAP packet, the transmitter selects the first routing table or the second routing table corresponding to the identified direction.

Thus, for example, the IAB node 300-1 can appropriately forward the received packet, using the routing table corresponding to the identified direction.

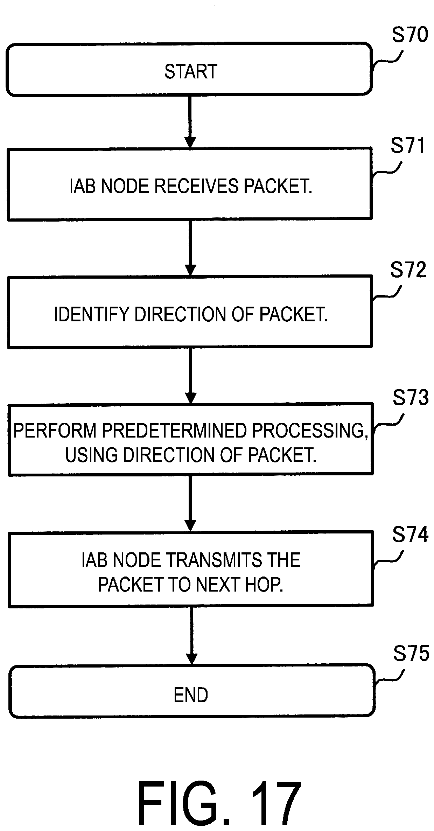

FIG. 17 is a diagram illustrating the fifth operation example according to the first embodiment.

As illustrated in FIG. 17, in Step S70, the IAB node 300 starts processing.

In Step S71, the IAB node 300 receives a packet.

In Step S72, the BAP layer of the IAB node 300 identifies the direction of the packet. For example, the BAP layer may identify the direction of the packet as follows.

That is, when the BAP layer receives the packet from a child node (a backhaul link corresponding thereto) of the IAB node 300, the BAP layer identifies that it is the upstream direction. When the BAP layer receives the packet from the UE 100 (an access link corresponding thereto), the BAP layer identifies that it is the upstream direction. On the other hand, when the BAP layer receives the packet from a parent node (a backhaul link corresponding thereto) of the IAB node 300, the BAP layer identifies that it is the downstream direction. When the BAP layer receives the packet in the IAB-DU of the IAB node 300, the BAP layer identifies that it is the upstream direction. When the BAP layer receives the packet in the IAB-MT of the IAB node 300, the BAP layer identifies that it is the downstream direction.

In Step S73, the BAP layer performs predetermined processing, using the identified direction of the packet. The predetermined processing is one of the following processing operations.

Firstly, when two routing tables are present for each direction of the packet, the BAP layer selects the routing table corresponding to the identified direction. That is, when the identified direction of the packet is the upstream direction, the BAP layer selects the first routing table or the second routing table corresponding to the upstream direction. On the other hand, when the identified direction of the packet is the downstream direction, the BAP layer selects the first routing table or the second routing table corresponding to the downstream direction. Then, the BAP layer performs the routing processing, using the selected routing table.

Secondly, when the routing table is not present for each direction of the packet, and the direction of the packet is indicated in an entry in the routing table, the BAP layer performs the routing processing for the entry corresponding to the identified direction. For example, it is assumed that the first routing table and the second routing table are present, the direction of the packet is indicated in an entry in the first routing table, and the direction of the packet is indicated in an entry in the second routing table. In this case, the BAP layer performs the routing processing, using the entry corresponding to the identified direction (the upstream direction or the downstream direction) in the first routing table or the second routing table.

In Step S74, the IAB node 300 transmits the packet to the next hop node.

Then, in Step S75, the IAB node 300 ends the series of processing.

### Variation of Fifth Operation Example

The fifth operation example describes an example of performing the routing processing. The fifth operation example may be applied to the mapping processing.

That is, the BAP layer identifies the direction of the received packet, in a manner the same as and/or similar to the fifth operation example. Then, when two mapping tables are present for each direction of the packet, the BAP layer selects the first mapping table or the second mapping table corresponding to the identified direction, and performs the mapping processing using the selected mapping table. When the mapping table is not present for each packet, and the direction of the packet is indicated in an entry in the mapping table, the BAP layer performs the mapping processing, using the entry corresponding to the direction in the first mapping table or the second mapping table.

### Sixth Operation Example

The third operation example describes the identifier indicating that the target of inter-topology routing.

The sixth operation example will describe how the donor DU or the access IAB node writes the identifier in the header of the packet.

Specifically, firstly, the CU of the donor node (for example, the donor 200) performs configuration for the DU of the donor node or the access IAB node as to whether to perform writing in the identifier indicating inter-topology routing in association with the routing ID. Secondly, the DU of the donor node or the access IAB node transmits, to the next hop node, the BAP packet provided with the BAP header including the routing ID and the identifier in accordance with the configuration.

Thus, for example, the DU of the donor node 200 and the access IAB node can appropriately write the identifier in the BAP header.

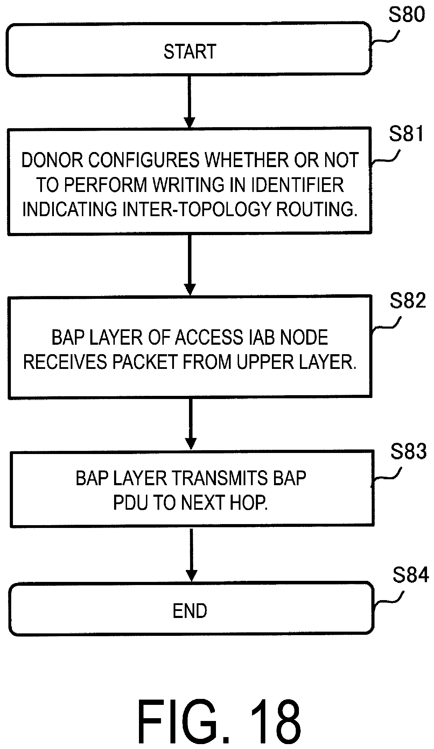

FIG. 18 is a diagram illustrating the sixth operation example according to the first embodiment.

As illustrated in FIG. 18, in Step S80, the donor node 200 starts processing.

In Step S81, the CU of the donor node 200 performs configuration for the DU of the donor node 200 or the access IAB node as to whether to perform writing in the identifier indicating inter-topology routing in association with the routing ID.

Firstly, the configuration for the access IAB node is configured using F1AP. That is, the donor node 200 transmits "Uplink Traffic to Routing ID Mapping Configuration" to the access IAB node and thereby performs the configuration. The mapping configuration includes the following IEs.
U1: a traffic type specifier
U2: a routing ID
U3: information as to whether to write in the identifier indicating inter-topology routing

Here, regarding U3 above, when the mapping configuration includes the IE, the identifier may be written in the BAP header, whereas when the mapping configuration does not include the IE, the identifier may not be written in the BAP header. Regarding U3 above, when the information is "1", the identifier may be written in the BAP header, whereas when the information is "0", the identifier may not be written in the BAP header. "1" and "0" may be the opposite. The information may be indicated by "True" or "False". The information may be indicated by "Yes" or "No".

Secondly, the configuration for the DU of the donor node 200 is configured using a predetermined IE ("IP-to-layer-2 traffic mapping Information List IE"). That is, the CU of the donor node 200 outputs "Downlink Traffic to Routing ID Mapping Configuration" to the DU of the donor node 200 and thereby performs the configuration. The mapping configuration includes the following IEs.
D1: a destination IP address
D2: an IPv6 flow level (IPv6 flow label)
D3: a differentiated services code point (DSCP)
D4: a routing ID
D5: information as to whether to write in the identifier indicating inter-topology routing

The mapping configuration also includes D5, in a manner the same as and/or similar to the configuration for the access IAB node. Regarding D5, in a manner the same as and/or similar to U3, when the mapping configuration includes the IE, the identifier may be written in the BAP header (or writing may be indicated), whereas when the mapping configuration does not include the IE, the identifier may not be written in the BAP header (or writing may not be indicated). When the information is "1", the identifier may be written in the BAP header, whereas when the information is "0", the identifier may not be written in the BAP header. "1" and "0" may be the opposite. The information may be indicated by "True" or "False". The information may be indicated by "Yes" or "No".

Note that the following will describe an operation example in the access IAB node.

In Step S82, the BAP layer of the access IAB node receives a BAP packet (BAP SDU) from an upper layer.

Firstly, the BAP layer selects an entry including a traffic specifier corresponding to the packet from the mapping configuration ("Uplink Traffic to Routing ID Mapping Configuration").

Secondly, the BAP layer regards the routing ID in the selected entry as the routing ID to be written in the BAP header.

Then, thirdly, when writing in the identifier indicating inter-topology routing is indicated in the selected entry, the BAP layer sets identifier in the BAP header to "1". On the other hand, when writing in the identifier is not indicated in the selected entry, the BAP layer sets the identifier to "0".

Fourthly, the BAP layer adds the BAP header including the routing ID and the identifier to the packet (BAP SDU), and generates a BAP PDU.

In Step S83, the BAP layer of the access IAB node performs the routing processing and the mapping processing for the BAP PDU, and transmits the BAP PDU to the next hop node.

Then, in Step S84, the BAP layer of the access IAB node ends the series of processing.

Here, regarding Step S82 and Step S83, when the DU of the donor node 200 performs the processing, the "access IAB node" in Step S82 and Step S83 may be replaced with the "DU of the donor node 200", and the mapping configuration may be replaced with "Downlink Traffic to Routing ID Mapping Configuration".

In the above, the first embodiment related to the inter-topology routing scenario (S3-1) has been described. The inter-topology re-routing scenario (S3-2) will be described.

### Second Embodiment

A second embodiment will be described.

The second embodiment will describe inter-topology re-routing.

In 3GPP, supporting inter-topology re-routing is agreed. The inter-topology re-routing means that the IAB node re-routes a packet to the CU of the original donor node (or the source donor node) via an alternative path on the topology of the CU of the target donor node.

Regarding the inter-topology re-routing, in 3GPP, the following is agreed: when the IAB node executes recovery from a BH RLF via RRC reestablishment in a new donor CU, re-routing may be performed via a recovered path with ongoing F 1 connection with the original donor node being maintained.

In other words, the inter-topology re-routing in the IAB node may be applied to the target donor node in an RRC reestablishment state with F 1 connection with the source donor node remaining. In other words, in the IAB node, the inter-topology re-routing may be applied not in a state of dual connectivity (DC) with two donor nodes but in a transient state where F1 connection with the target donor node has not been established.

In such a transient state, even when the IAB node executes the inter-topology re-routing using a procedure of local re-routing of Rel-16, the IAB node may not be able to execute the inter-topology re-routing.

That is, in the procedure of local re-routing of Rel-16, the routing ID matching the destination included in the BAP header of the BAP packet is selected from the routing table, and the packet is forwarded.

However, in the routing table of the source donor node, the routing ID for the target donor node (or the BAP address whose destination is the DU of the target donor node) is not present. This is because two donor nodes have different topologies, and the BAP address of each topology and the like are managed in the CU of each donor node.

Thus, even when the CU of the source donor node configures the routing table for the IAB node, the IAB node cannot forward the packet to the target donor node.

Even if the IAB node is able to forward the packet to the target donor node, the target donor node may not be able to recognize whether the packet is addressed to the target donor node or is addressed to the source donor node.

In the second embodiment, the target donor node configures a communication path for inter-topology re-routing for the IAB node, and the IAB node 300 forwards the packet via the communication path.

Specifically, firstly, the relay node (for example, the IAB node 300) detects a backhaul radio link failure in connection with a first donor node (for example, the source donor node) or connection with a first upper node. Secondly, when the relay node performs RRC reestablishment with a second donor node (for example, the target donor node) or a second upper node, the relay node reports information indicating continuation of communication with the first donor node. Here, the first upper node is a node managed by the first donor node, and is an upper node of the relay node. The second upper node is a node managed by the second donor node, and is an upper node of the relay node.

Thus, for example, the target donor node can recognize that communication is to be continued between the IAB node and the source donor node, and with this report being a trigger, the target donor node can perform configuration of the communication path for inter-topology re-routing for the IAB node. In the above-described transient state as well, the IAB node can appropriately forward the received packet, using the communication path.

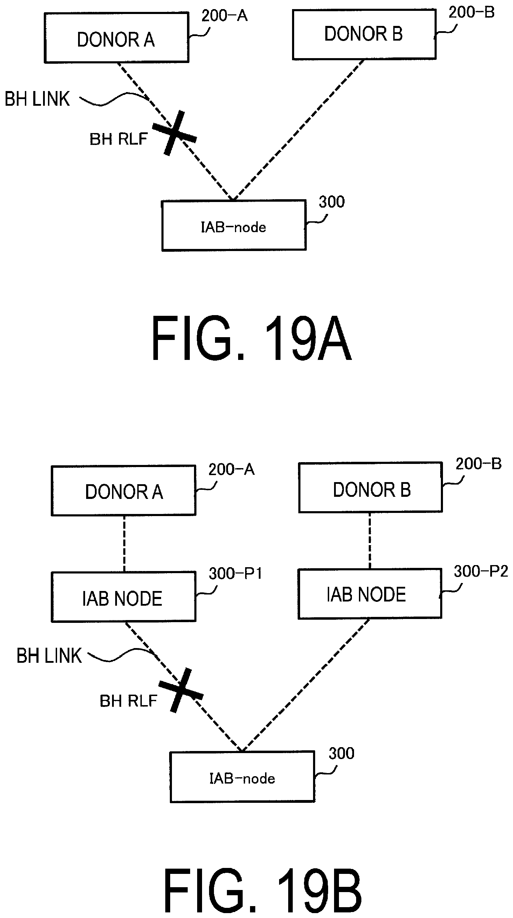

FIG. 19A and FIG. 19B are each a diagram illustrating a configuration example of a topology according to the second embodiment.

FIG. 19A illustrates an example in which a BH RLF occurs in a backhaul link between the IAB node 300 and a donor node A (200-A). FIG. 19B illustrates an example in which a BH RLF occurs in a backhaul link between the IAB node 300 and an upper node 300-P1. In FIG. 19B, the IAB node 300-P1 is a node managed by the donor node A (200-A). The IAB node 300-P2 is a node managed by a donor node B (200-B).

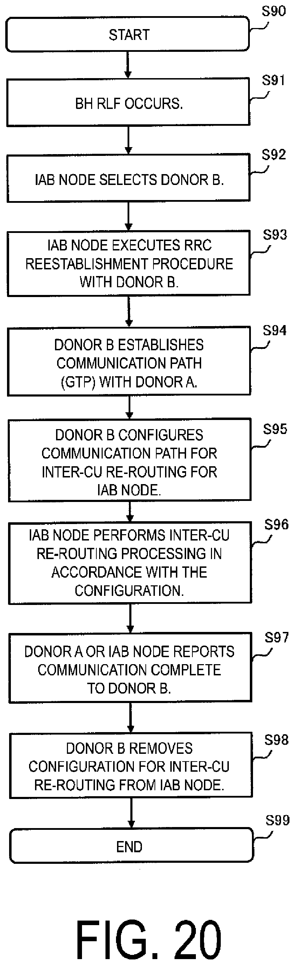

FIG. 20 is a diagram illustrating an operation example according to the second embodiment. The operation example illustrated in FIG. 20 will be described with appropriate reference to the configuration examples illustrated in FIG. 19A and FIG. 19B.

As illustrated in FIG. 20, in Step S90, the IAB node 300 starts processing.

In Step S91, a BH RLF occurs in a backhaul link. For example, in the example of FIG. 19A, the IAB-MT of the IAB node 300 detects a BH RLF in a backhaul link with the donor node A (200-A). In the example of FIG. 19B, the IAB-MT of the IAB node 300 detects a BH RLF with the IAB node 300-P1.

Referring back to FIG. 20, in Step S92, the IAB node 300 selects the donor node B (200-B) through cell selection. The IAB node 300 may select the IAB node 300-P2 managed by the donor node B (200-B) through cell selection.

In Step S93, the IAB node 300 executes an RRC reestablishment procedure with the donor node B (200-B). For example, the following procedure is executed.

Firstly, the IAB node 300 transmits an RRC reestablishment request message to the donor node B (200-B). The IAB node 300 may transmit the message to the donor node B (200-B) via the IAB node 300-P2.

In this case, in the message, the IAB node 300 may report information (or a request) indicating continuation of communication with the donor node A (200-A) to the donor node B (200-B). Alternatively, in the message, the IAB node 300 may report information indicating that the IAB node 300 has an inter-topology re-routing capability to the donor node B (200-B). Alternatively, in the message, the IAB node 300 may report information indicating that F1 connection with the donor node A (200-A) remains to the donor node B (200-B). Alternatively, in the message, the IAB node 300 may report an establishment request for a communication path with the donor node A (200-A) to the donor node B (200-B).

Note that the report may be performed in each message of later RRC reestablishment complete or even later UE assistance information (UE Assistanve Information).

Secondly, the donor node B (200-B) receives the RRC reestablishment request, and transmits an RRC reestablishment message to the IAB node 300.

Thirdly, in response to reception of the RRC reestablishment message, the IAB node 300 transmits an RRC reestablishment complete message to the donor node B (200-B).

Through the above, RRC connection is established between the IAB node 300 and the donor node B (200-B).

In Step S94, the donor node B (200-B) establishes a communication path (General Packet Radio System (GPRS) Tunnelling Protocol (GTP)) with the donor node A (200-A). This is for the donor node B (200-B) to transmit the packet in the upstream direction that has been subjected to inter-topology routing in the IAB node 300 to the donor node A (200-A), using the communication path. In addition, the donor node A (200-A) also establishes a communication path (GTP) with the donor node B (200-B). This is for the donor node A (200-A) to transmit the packet in the downstream direction to the donor node B (200-B).

For example, the donor node B (200-B) transmits a communication path establishment request message to the donor node A (200-A). In response to reception of the message, the donor node A (200-A) transmits a positive response message to the donor node B (200-B). Thus, the communication path may be established. The request message may include an identifier of the IAB node 300, a GTP Tunnel Endpoint Identifier (TEID) for downstream packet reception, and an IP address. The positive response message may include a GTP TEID for upstream packet reception and an IP address.

Note that establishment of the GTP communication path may be performed before the donor node B (200-B) transmits an RRC reestablishment message to the IAB node 300.

In Step S95, the donor node B (200-B) configures a communication path for inter-topology re-routing for the IAB node 300. That is, the second donor node (for example, the donor node B (200-B)) configures the communication path for inter-topology re-routing for the relay node (for example, the IAB node 300).

The donor node B (200-B) performs configuration of the communication path for the IAB node 300, using the RRC connection established in Step S93. Specifically, the CU of the donor node B (200-B) transmits an RRC reconfiguration message to the IAB-MT of the IAB node 300, and thereby performs the configuration of the communication path. The message includes configuration for establishing a (temporary) backhaul RLC channel (BH RLC channel) for inter-topology re-routing.

Firstly, the configuration may include a (temporary) routing table for inter-topology re-routing. The routing table may include a routing ID and a next hop BAP address.

Secondly, the configuration may include a (temporary) mapping table for inter-topology re-routing. The mapping table may include an ingress backhaul RLC channel (ingress BH RLC channel), an egress backhaul RLC channel (egress BH RLC channel), an ingress backhaul link (ingress BH link), and an egress backhaul link (egress BH link).

Thirdly, the configuration may include a BAP address of the IAB node 300. The BAP address is a BAP address for the IAB node 300 managed by the donor node B (200-B).

Fourthly, the configuration may include a BAP address of the DU of the donor node B (200-B).

Fifthly, the configuration may include a BAP header rewriting table.

When the RRC layer of the IAB node 300 receives the configuration, the RRC layer outputs the configuration to the BAP layer of the IAB node 300. The BAP layer may handle the configuration as the routing table and/or the mapping table.

In Step S96, the BAP layer of the IAB node 300 performs inter-topology re-routing processing, in accordance with the configuration. For example, the BAP layer of the IAB node performs the following processing.

Firstly, the BAP layer rewrites the BAP header of a retained packet addressed to the donor node A (200-A) to the routing ID for the DU of the donor node B (200-B), in accordance with the configuration.

Secondly, the BAP layer identifies the next hop BAP address (or the egress backhaul link corresponding to the next hop BAP address) from the routing ID, in accordance with the configuration. In this case, the BAP layer may use the routing table for inter-topology re-routing according to the configuration. For example, the BAP layer may read an entry matching the routing ID from the routing table for inter-topology re-routing, and identify the egress backhaul link corresponding to the next hop BAP address of the entry.

Thirdly, the BAP layer identifies the egress backhaul RLC channel from the configuration. In this case, the BAP layer may use the mapping table for inter-topology re-routing according to the configuration. For example, the BAP layer may read an ingress backhaul RLC channel of the packet, an ingress backhaul, and an entry matching the identified egress backhaul link, and identify the egress backhaul RLC channel included in the entry.

Fourthly, the BAP layer outputs the retained packet to the identified egress backhaul RLC channel of the identified egress backhaul link.

Note that, regarding identification of the egress backhaul link and identification of the egress backhaul RLC channel, for example, processing may be performed as follows. That is, regarding the packet waiting to be transmitted and retained in the IAB node 300, when an entry matching the routing ID included in the header of the packet is not present in the routing table and an entry matching the destination included in the header of the packet is not present in the routing table, the BAP layer selects the backhaul RLC channel configured in the configuration as a transmission destination, and transmits the retained packet via the selected backhaul RLC channel. In other words, in such a case, the BAP layer transmits the retained packet to the communication path for inter-topology re-routing.

The BAP layer of the IAB node 300 may receive the packet in the downlink direction transmitted by the donor node A (200-A) from the ingress backhaul link and the ingress backhaul RLC channel via the donor node B (200-B), in accordance with the configuration.

In Step S97, when F1 connection between the donor node A (200-A) and the IAB node 300 is released, the donor node A (200-A) or the IAB node 300 reports information indicating completion of F1 communication (for example, a discard request for the communication path) to the donor node B (200-B).

For example, the donor node A (200-A) transmits the discard request for communication for inter-topology re-routing between the donor node B (200-B) and the IAB node 300 to the donor node B (200-B). The donor node B (200-B) can also simultaneously execute the report and the discarding of the communication by returning a positive response for the discard request to the donor node A (200-A). Alternatively, release of the F1 connection may be implicitly reported by an F1 layer of the IAB node transmitting an F1 setup request to the donor node B (200-B).

In Step S98, the donor node B (200-B) removes the backhaul RLC channel configuration for inter-topology re-routing (or the configuration of the communication path for inter-topology re-routing) configured in Step S95 from the IAB node 300. That is, when F1 connection with the first donor node (for example, the donor node A (200-A)) or F1 connection with the first upper node (for example, the IAB node 300-P1) is released, the relay node (for example, the IAB node 300) discards the configuration of the communication path for inter-topology re-routing.

For example, the donor node B (200-B) may instruct the IAB node 300 to remove the configuration. The IAB node 300 may automatically remove the configuration. In the latter case, the IAB node 300 may remove the configuration, with the report of F1 communication complete in Step S97 being a trigger.

In Step S99, the donor node B (200-B) ends the series of processing.

### Variation of Second Embodiment

In the second embodiment, the IAB node 300 reestablishes RRC connection with the donor node B (200-B), and the donor node B (200-B) performs configuration of the communication path for inter-topology re-routing for the IAB node 300, using an RRC message.

A variation of the second embodiment is an example in which the configuration of the communication path is performed using F1, instead of RRC. Specifically, firstly, the relay node (for example, the IAB node 300) detects a BH RLF in connection with the first donor node (for example, the donor node A (200-A)) or connection with the first upper node (for example, the IAB node 300-P1). Secondly, when the relay node performs F1 setup for the second donor node (for example, the donor node B (200-B)) or the second upper node (for example, the IAB node 300-P2), the relay node reports information indicating continuation of communication with the first donor node. Here, the first upper node is a node managed by the first donor node, and is an upper node of the relay node. The second upper node is a node managed by the second donor node, and is an upper node of the relay node.

Thus, for example, the target donor node can recognize that communication is to be continued between the IAB node and the source donor node, and with this report being a trigger, the target donor node can perform configuration of the communication path for inter-topology re-routing for the IAB node, using an F1AP message. Then, owing to the configuration of the communication path, the IAB node can appropriately perform inter-topology re-routing.

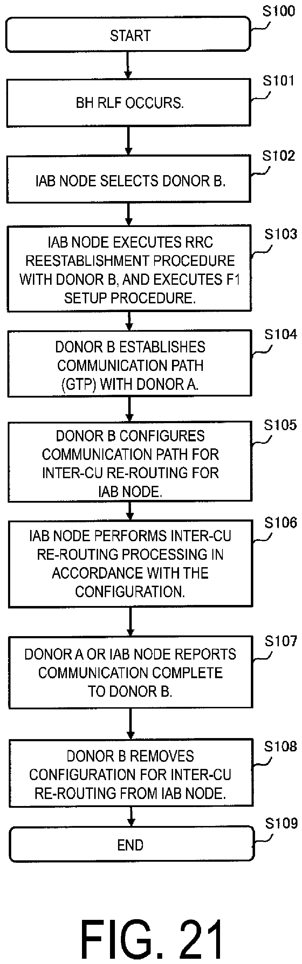

FIG. 21 is a diagram illustrating the variation according to the second embodiment.

As illustrated in FIG. 21, in Step S100, the IAB node 300 starts processing.

Step S101 and Step S102 are respectively the same as Step S91 and Step S92 of the second embodiment.

In Step S103, the IAB node 300 executes an RRC reestablishment procedure with the donor node B (200-B), and reestablishes RRC connection with the donor node B (200-B). Subsequently, the IAB node 300 executes an F1 setup procedure, and establishes F1 connection with the donor node B (200-B).

Note that the F1 setup procedure is performed between the IAB-DU of the IAB node 300 and the CU of the donor node B (200-B). The F1 setup procedure is performed as follows, for example.

Firstly, the IAB node 300 transmits an F1 setup request message to the donor node B (200-B). In this case, in a manner the same as and/or similar to the second embodiment, in the message, the IAB node 300 reports information indicating continuation of communication with the donor node A (200-A). Alternatively, in a manner the same as and/or similar to the second embodiment, the IAB node 300 may report information indicating that the IAB node 300 has an inter-topology re-routing capability, or may report information indicating that F1 connection with the donor node A (200-A) remains. Note that the report may be performed in a later F1 setup response message or an even later UE assistance information message.

Secondly, the donor node B (200-B) receives the request, and transmits an F1 setup response message to the IAB node 300.

Thus, F1 connection between the IAB node 300 and the donor node B (200-B) is established.

Step S104 is the same as Step S94 of the second embodiment.

In Step S105, the donor node B (200-B) configures a (temporary) communication path for inter-topology re-routing for the IAB node 300. The configuration is performed using an F1 reconfiguration update (F1 Configuration Update) message. The details of the configuration are the same as those of the second embodiment. In a manner the same as and/or similar to the second embodiment, the configuration includes configuration for establishing a (temporary) backhaul RLC channel for inter-topology re-routing. When the F1AP layer of the IAB node 300 receives the configuration, the F1AP layer outputs the configuration to the BAP layer of the IAB node 300. In a manner the same as and/or similar to the second embodiment, the BAP layer may handle the configuration as the routing table and/or the mapping table.

Note that the configuration may be performed using an F1 setup response message.

In Step S106, the BAP layer of the IAB node 300 performs inter-topology re-routing processing, in accordance with configuration. The inter-topology re-routing processing itself is the same as and/or similar to that of the second embodiment.

Step S107 and Step S108 are respectively the same as Step S97 and Step S98 of the second embodiment.

In Step S109, the donor node B (200-B) ends the series of processing.

In the above, the second embodiment related to the inter-topology re-routing scenario (S3-2) has been described. The inter-donor-DU re-routing scenario (S2-2) will be described.

### Third Embodiment

A third embodiment will be described.

The third embodiment will describe inter-donor-DU re-routing.

For example, in a case of the topology configuration example illustrated in FIG. 9B, a plurality of donor node DUs are present. Thus, a plurality of BAP addresses of the donor node DUs are also present. In the example of FIG. 9B, two BAP addresses are present, i.e., the BAP address of donor node DU #1 (200D1) and the BAP address of donor node DU #2 (200D2).

Here, regarding the packet in the downstream direction, a transmission source (donor node DU) is not involved in routing processing in the IAB node 300-1. Regarding the packet in the downstream direction, the destination (access IAB node) does not change even when the routing processing is performed. Thus, it is expected that the inter-donor-DU re-routing in the downstream direction has particularly no problem.

On the other hand, regarding the upstream direction, when the inter-donor-DU re-routing is performed, the destination (donor node DU) changes. In other words, the destination BAP address is changed regarding each packet. Thus, in the IAB node 300-1, the BAP header rewriting processing may be performed. In 3GPP, as the BAP header rewriting processing, "'previous routing ID to new routing ID' BAP rewriting" is agreed.

Here, in the present scenario, two problems exist.

Firstly, unlike routing, in re-routing, it is a principle that the routing processing is performed once, and the routing processing is performed again for a packet having no destination. Thus, a timing to perform the BAP header rewriting processing needs to be taken into consideration.

Secondly, it is unclear whether the IAB node 300-1 appropriately selects a route matching the destination of the received packet, or an alternative path is explicitly configured by the donor node. Thus, it may be considered that the configuration is complicated.

### First Operation Example

A first operation example according to the third embodiment will be described.

The first operation example is an operation example in which the routing processing is performed once, the BAP header rewriting processing is performed for an unsuccessfully transmitted packet, and subsequently the routing processing is performed again.

Specifically, firstly, the relay node (for example, the IAB node 300-1) receives a packet. Secondly, the relay node performs the routing processing for the packet, and checks that the next hop BAP address cannot be selected or the egress backhaul link cannot be selected. Thirdly, the relay node determines that the checked packet is the packet as a target of inter-donor-DU re-routing. Fourthly, the relay node performs the routing processing again for the packet determined to be the packet as a target of inter-donor-DU re-routing.

Thus, for example, the processing in compliance with the principle of re-routing can be performed, in which the routing processing is performed and then the routing processing is performed again for a packet having no destination.

Then, the relay node executes the BAP header rewriting processing of rewriting the destination of the packet for the packet determined to be the packet as a target of inter-donor-DU re-routing. In this case, the relay node performs the routing processing again for the packet whose packet destination has been rewritten.

Thus, for example, in the IAB node 300-1, the BAP header rewriting processing, the routing processing, and the routing processing to be performed again can be appropriately performed.

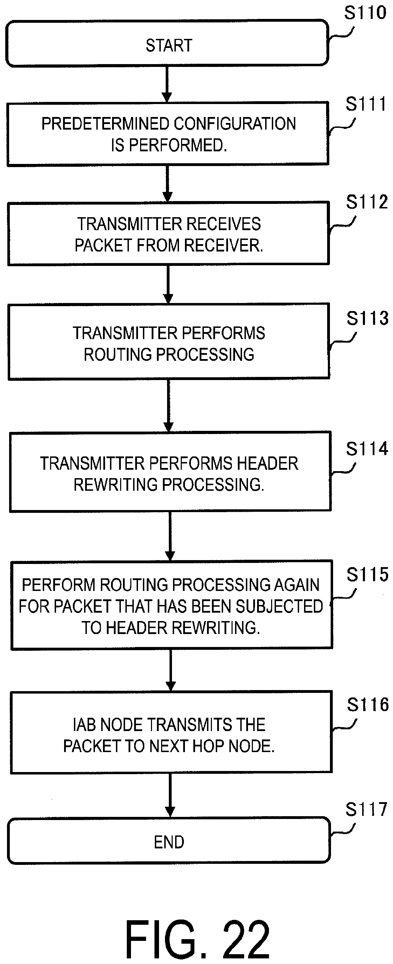

FIG. 22 is a diagram illustrating the first operation example according to the third embodiment. For example, FIG. 22 will be described with appropriate reference to the configuration example illustrated in FIG. 9B.

As illustrated in FIG. 22, in Step S110, the IAB node 300-1 starts processing.

In Step S111, the IAB node 300-1 receives a predetermined configuration from the donor node 200. The predetermined configuration is as follows, for example.

Firstly, the configuration of the header rewriting table is performed. In this case, in the header rewriting table, the header rewriting table for inter-topology routing described in the first embodiment and the header rewriting table for inter-donor-DU re-routing according to the third embodiment are configured. The two tables may include identifiers for identifying the respective tables.

Secondly, the BAP addresses of two donor DUs are configured. In the example of FIG. 9B, two BAP addresses of donor DU #1 (200D1) and donor DU #2 (200D2) are configured. Note that three or more BAP addresses may be configured.

In Step S112, the transmitter of the BAP layer of the IAB node 300-1 receives a packet from the receiver of the BAP layer of the IAB node 300-1. Here, in a manner the same as and/or similar to the first embodiment, the receiver of the BAP layer may output the packet addressed to the receiver in the downstream direction to an upper layer. For example, this is because it is the access IAB node and thus does not need to perform the routing processing and the like. Thus, the transmitter receives a packet other than the packet addressed to the transmitter from the receiver.

In Step S113, the transmitter performs the routing processing for the packet. In the routing processing, for example, the following processing is performed.

Firstly, the transmitter checks the BAP header of the packet, and checks that an entry whose destination and path ID match is not present in the routing table, or that even when the entry is present, the next hop BAP address corresponding to the entry is not available (the routing processing of Rel-16).

Secondly, the transmitter checks the BAP header of the packet, and checks that an entry whose destination matches is not present in the routing table, or that even when the entry is present, the next hop BAP address corresponding to the entry is not available (the re-routing processing of Rel-16).

In other words, the transmitter checks the above two, and checks that the next hop BAP address cannot be selected.

When the next hop BAP address is available, the transmitter checks that a corresponding egress backhaul link is not available. In other words, the transmitter checks that the egress backhaul link cannot be selected.

Thirdly, the transmitter may check that the egress backhaul RLC channel cannot be selected in the mapping processing. That is, the transmitter may check that an entry matching the ingress backhaul RLC channel and the ingress backhaul link of the packet and the egress backhaul link selected in the routing processing is not present in the mapping table.

Fourthly, the transmitter checks the BAP header of the packet, and checks that the destination is the BAP address of the DU of the donor node 200 (for example, donor node DU #1 (200D1)). The BAP address of the DU of the donor node is configured for the IAB node 300-1 by the donor node 200 in Step S111, for example. Thus, the transmitter can perform checking by comparing the BAP address and the destination of the packet. Note that the checking makes it possible to forestall BAP header rewriting in the downstream direction and allow performing of header rewriting for the packet in the upstream direction.

Fifthly, after the transmitter checks that the packet is addressed to the DU of the donor node 200, the transmitter may perform marking that the packet is the packet as a target of inter-donor-DU re-routing (or is in the upstream direction). Instead of the marking, the transmitter may store the packet in a special transmission buffer (that is, a buffer for inter-donor-DU re-routing).

When the packet is the packet as a target of inter-donor-DU re-routing (or is in the upstream direction) and the header rewriting table is configured, the transmitter transitions to the next header rewriting processing.

In Step S114, the transmitter performs the header rewriting processing for the packet. The header rewriting processing is the same as and/or similar to that of Step S16 (FIG. 10) in the first operation example in the first embodiment.

In Step S115, the transmitter performs the routing processing and the mapping processing again for the packet for which the header rewriting processing has been completed. The transmitter selects the egress backhaul link and the egress backhaul RLC channel through the two processing operations.

In Step S116, the transmitter outputs the packet to the selected egress backhaul RLC channel of the selected egress backhaul link. Then, the IAB node 300-1 transmits the packet to the selected next hop node.

In Step S117, the IAB node 300-1 ends the series of processing.

### Summary of First Operation Example

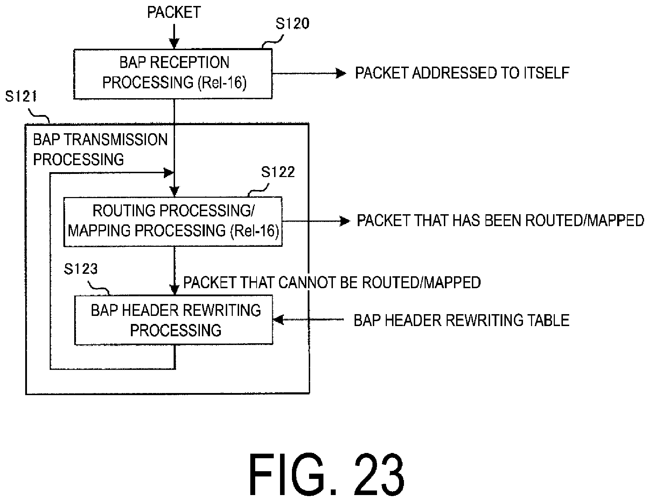

FIG. 23 is a diagram of a summary of the first operation example according to the third embodiment.

In FIG. 23, Step S120 corresponds to Step S112 of FIG. 22. Step S122 of FIG. 23 corresponds to Step S113 of FIG. 22. Step S123 of FIG. 23 corresponds to Step S114 of FIG. 22.

As illustrated in FIG. 23, the transmitter performs the routing processing and the mapping processing (Step S122), and performs the BAP header rewriting processing for the packet that cannot be routed in the routing processing or the packet that cannot be mapped in the mapping processing (Step S123).

Then, the transmitter performs the routing processing and the mapping processing again, and transmits the packet that has been subjected to the processing to the next hop node as the packet that has been subjected to the inter-donor-DU re-routing.

### Variation of First Operation Example

At least a part of the first operation example according to the third embodiment can also be applied to scenarios other than the inter-donor-DU re-routing.

### Second Operation Example

A second operation example according to the third embodiment will be described.

5.2.1.1 "General" in 3GPP TS 38.340 V16.5.0 (2016-06) has the following description.

"NOTE: Data buffering on the transmitting part of the BAP entity, e.g., until RLC-AM entity has received an acknowledgement, is up to implementation. In case of BH RLF, the transmitting part of the BAP entity may reroute the BAP Data PDUs, which has not been acknowledged by lower layer before the BH RLF, to an alternative path in accordance with clause 5.2.1.3."

As described in the underlined part, re-routing in 3GPP is performed for a packet with which an Ack is not checked in a lower layer out of transmitted packets.

The second operation example will describe an operation example in which inter-donor-DU re-routing is performed for transmitted packets.

Specifically, firstly, after packet transmission, the relay node (for example, the IAB node 300-1) stores a duplicate (or a copy) of the packet in a buffer. Secondly, the relay node selects a packet as a target of inter-donor-DU re-routing out of the packets stored in the buffer. Thirdly, the relay node performs the BAP header rewriting processing of rewriting the destination of the packet for the selected packet. Fourthly, the relay node performs the routing processing again for the packet that has been subjected to BAP packet rewriting processing.

Thus, for example, the IAB node 300-1 can select a packet as a target of inter-donor-DU re-routing out of the packets retained in the buffer, and can appropriately perform the inter-donor-DU re-routing.

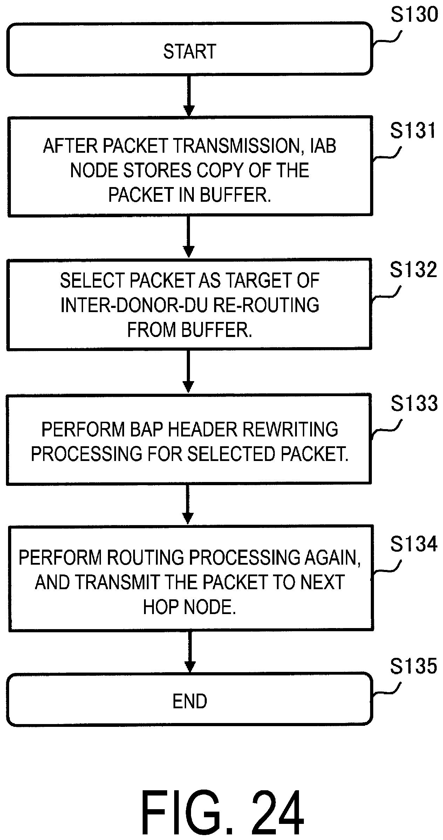

FIG. 24 is a diagram illustrating the second operation example according to the third embodiment.

As illustrated in FIG. 24, in Step S130, the IAB node 300-1 starts processing.

In Step S131, after transmitting a packet, the BAP layer of the IAB node 300-1 stores a copy of the packet in a buffer. The BAP layer may associate at least one selected from the group consisting of the routing ID, the next hop BAP address, the egress backhaul link, and the egress backhaul RLC channel used for transmission of the packet with the packet stored in the buffer and then store the packet. Alternatively, a plurality of buffers associated with one of the routing ID, the next hop BAP address, the egress backhaul link, and the egress backhaul RLC channel may be provided. In this case, the BAP layer may store a copy of the packet in a corresponding buffer according to the transmission destination of the packet. Note that, when the BAP layer receives a notification of transmission confirmation for the packet from a lower layer (RLC), the BAP layer deletes the packet (the copy thereof) stored in the buffer from the buffer.

In Step S132, when the BAP layer determines to execute inter-donor-DU re-routing, the BAP layer selects a packet as a target of inter-donor-DU re-routing out of the packets stored in the buffer. The determination to execute inter-donor-DU re-routing and the selection of the packet as a target of inter-donor-DU re-routing are performed as follows, for example.

Firstly, when the IAB node 300-1 detects a BH RLF, the IAB node 300-1 determines to execute the re-routing. The IAB node 300-1 may identify the egress backhaul link in which the BH RLF is detected. Alternatively, the IAB node 300-1 may identify at least one selected from the group consisting of the routing ID, the next hop BAP address, and the egress backhaul RLC channel to be affected by the egress backhaul link. The IAB node 300-1 selects a packet associated with the identified egress backhaul link (or at least one selected from the group consisting of the routing ID, the next hop BAP address, and the egress backhaul RLC channel) from the buffer. The packet may be the packet as a target of the re-routing.

Secondly, when the IAB node 300-1 receives a Type2 BH RLC Indication, the IAB node 300-1 determines to execute the re-routing. The Type2 BH RLC Indication is an Indication indicating that recovery from the BH RLF is being carried out. The IAB-DU of the IAB node 300-P1 being an upper node of the IAB node 300-1 transmits the Indication to the IAB-MT of the IAB node 300-1. The IAB node 300-1 may identify the egress backhaul link in which the Indication is received. Alternatively, when the IAB node 300-1 is notified of a routing ID and a backhaul RLC channel ID that cannot be routed (or that is to be affected or that needs to be re-routed) in the Indication, the IAB node 300-1 may identify these IDs. Alternatively, the IAB node 300-1 may identify the next hop BAP address to be affected from these identified pieces of information. The IAB node 300-1 selects a packet associated with the identified egress backhaul link (or at least one selected from the group consisting of the routing ID, the egress backhaul RLC channel, and the next hop BAP address) from the buffer. The packet may be the packet as a target of the re-routing.

Thirdly, when the IAB node 300-1 receives flow control feedback in the uplink direction from an upper node of the IAB node 300-1, the IAB node 300-1 determines to execute the re-routing. The IAB node 300-1 that has received the flow control feedback from the upper node performs control of, for example, reducing the amount of data transmission or the like to the upper node, and can thereby, for example, avoid congestion between IAB nodes. The IAB-MT (the BAP layer thereof) of the IAB node 300-1 can receive the feedback transmitted from the IAB-DU of the upper node. The IAB node 300-1 can identify the egress backhaul link in which the feedback is received. Alternatively, through the feedback, the IAB node 300-1 may identify the routing ID or the backhaul RLC channel associated with an available buffer size to be affected. When the available buffer size falls below a threshold value (configured by the donor node 200), the routing ID or the backhaul RLC channel associated with the buffer size may be a target of the re-routing. Alternatively, the IAB node 300-1 may identify the next hop BAP address from these identified pieces of information. The IAB node 300-1 selects a packet associated with at least one selected from the group consisting of the identified routing ID, egress backhaul link, egress backhaul RLC channel, and next hop BAP address from the buffer. The packet may be the packet as a target of the re-routing.

When the IAB node 300-1 executes the re-routing based on some other criterion, the IAB node 300-1 may select the packet as a target of the re-routing in the same and/or similar manner.

In Step S133, the IAB node 300-1 performs the BAP header rewriting processing for the selected packet. The BAP header rewriting processing is the same as and/or similar to that of the first operation example (Step S16 of FIG. 10) of the first embodiment.

In Step S134, the IAB node 300-1 performs the routing processing and the mapping processing performed before packet transmission again for the packet that has been subjected to the BAP header rewriting processing. The IAB node 300-1 transmits the packet that has been subjected to the processing to the next hop node.

Then, in Step S135, the IAB node 300-1 ends the series of processing.

### Variation of Second Operation Example

At least a part of the second operation example can also be applied to scenarios other than the inter-donor-DU re-routing.

### Third Operation Example

A third operation example according to the third embodiment will be described.

The first embodiment and the second embodiment describe examples in which the BAP layer of the IAB node 300 performs BAP header rewriting with reference to the BAP header rewriting table configured from the donor node 200.

On the other hand, in Rel-16, the BAP layer appropriately selects the routing ID of a re-routing destination out of the routing IDs matching the destination of the BAP header, with reference to a regular routing table. This is because in Rel-16, intra-CU/intra-donor-DU re-routing (S1-2) is assumed, which presupposes presence of a route for the re-routing destination in the same topology. Thus, no problem occurs.

Here, a problem when the same and/or a similar concept (that is, a concept in which the BAP header rewriting table is not present) is applied to inter-donor-DU re-routing will be studied.

Firstly, in the downstream direction, the destination is the access IAB node, and this does not differ from Rel-16. Thus, a problem will not be studied regarding the downstream direction.

Secondly, in the upstream direction, a plurality of donor node DUs are present (= a plurality of destination BAP addresses are present). Note that the plurality of DUs of the donor node are managed by the CU of the same donor node. Thus, presumably, in the routing table managed by the CU of the donor node, for example, two BAP addresses (destinations), i.e., the BAP address of donor DU #1 (200D1) and the BAP address of donor U #2 (200D2), are present.

However, even when the routing table is referred to with a clue of only the destination (for example, donor DU #1 (200D1)) included in the BAP header, the BAP address itself is different from another donor node DU (for example, donor DU #2 (200D2)), and thus the routing ID for such another donor DU may not be able to be selected as a candidate.

In 3GPP, performing BAP header rewriting from a previous routing ID to a new routing ID in the inter-donor-DU re-routing is already agreed.

In the third operation example, the donor node 200 configures an alternative destination (for example, donor DU #2 (200D2)) associated with the destination (for example, donor DU #1 (200D1)) for the IAB node 300-1. The IAB node 300-1 selects the routing ID including the alternative destination from the routing table, writes the selected routing ID in the BAP header, and thereby performs BAP header rewriting.

Specifically, firstly, the donor node (for example, the donor node 200) configures a first destination address of the first donor node (for example, donor DU #1 (200D1)) and a second destination address of the second donor node (for example, donor DU #2 (200D2)) for the relay node (for example, the IAB node 300-1). Secondly, the relay node receives a packet in the upstream direction. Thirdly, the relay node performs routing processing, and determines that the packet cannot be transmitted to the next hop relay node. Fourthly, regarding the determined packet, when a first routing ID including the BAP address matching the first destination address of the packet is not present in the routing table, the relay node selects a second routing ID including the BAP address matching the second destination address from the routing table. Fifthly, the relay node writes the second routing ID in the header of the packet. Here, the second destination address is associated with the first destination address.

Thus, in the inter-donor-DU re-routing, the IAB node 300-1 can perform BAP header rewriting without using the BAP header rewriting table.

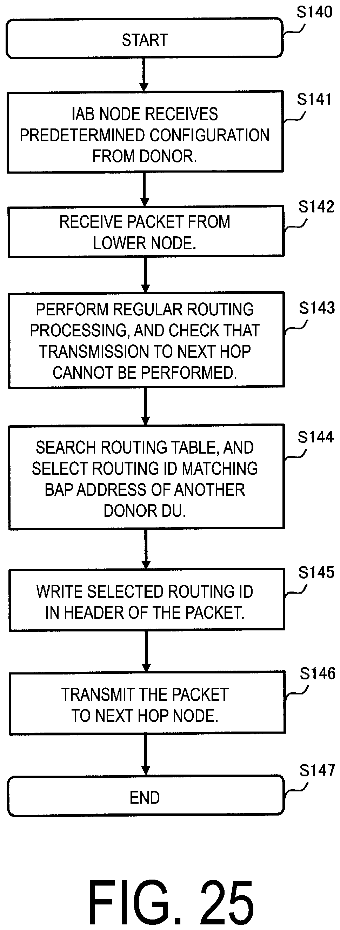

FIG. 25 is a diagram illustrating the third operation example according to the third embodiment.

As illustrated in FIG. 25, in Step S140, the IAB node 300-1 starts processing.

In Step S141, the IAB node 300-1 receives a predetermined configuration from the donor node 200. The predetermined configuration is as follows, for example.

That is, the predetermined configuration is BAP addresses regarding a plurality of DUs of the donor node 200. Alternatively, the predetermined configuration is an alternative destination used for the inter-donor-DU re-routing. For example, the BAP address of a certain destination (for example, donor DU #1 (200D1)) and the BAP address of the alternative destination (for example, donor DU #2 (200D2)) are configured in association with each other. Alternatively, an identifier indicating that a certain destination (for example, donor DU #1 (200D1) and donor DU #2 (200D2)) is available as an alternative destination (in the upstream direction) may be configured.

In Step S142, the IAB node 300-1 receives a packet from a lower node.

In Step S143, the IAB node 300-1 performs regular routing processing, and checks that the next hop node cannot be selected (or cannot be transmitted). The processing in Step S143 may be the same as and/or similar to that of the first operation example (Step S113 of FIG. 22) according to the third embodiment, for example.

In Step S144, the IAB node 300-1 searches the routing table for the routing ID including the BAP address matching the destination included in the header of the packet.

Firstly, when an entry including the routing ID is present in the routing table, and a corresponding next hop BAP address, egress backhaul link, and egress backhaul RLC channel are available, the IAB node 300-1 performs the routing processing again, in accordance with the configuration.

Secondly, when the entry is not present in the routing table, and a corresponding next hop BAP address is unavailable (unavilable or congested) or a corresponding egress backhaul link and/or egress backhaul RLC channel is unavailable (unavilable or congested), the processing proceeds to the following processing.

That is, when the IAB node 300-1 determines that the packet is in the upstream direction, the IAB node 300-1 searches the routing table for the routing ID including the BAP address matching the alternative destination associated with the destination of the packet (the BAP address of another donor node DU different from the destination).

Here, as a method for determining that the direction is the upstream direction, when the destination included in the header of the packet matches the BAP address of the DU of the donor node 200 configured in Step S141, the IAB node can determine that the packet is in the upstream direction. When the alternative destination matching the destination included in the header of the packet is present according to the configuration of Step S141, the IAB node 300-1 can determine that the direction is the upstream direction.

As a result of the search, when the routing ID including the BAP address of the DU of another donor node (or alternative destination) is present in the routing table, the IAB node 300-1 selects the routing ID. Subsequently, IAB node 300-1 selects the next hop BAP address corresponding to the routing ID, and selects a corresponding egress backhaul link and egress backhaul RLC channel. In this case, the IAB node 300-1 checks that the selected next hop BAP address, egress backhaul link, and egress backhaul RLC channel are transmittable (available).

In Step S145, the IAB node 300-1 writes the selected routing ID in the header of the packet. In other words, when the IAB node 300-1 selects the routing ID including the alternative destination, the IAB node 300-1 writes the routing ID in the header. Thus, the BAP header rewriting is performed. Here, the IAB node 300-1 may report information related to the BAP header rewriting to the donor. The information may be a routing ID before being rewritten (that is, a previous routing ID or a Previous Routing ID) and/or a routing ID after being rewritten (that is, a new routing ID or a New Routing ID) when the BAP header rewriting is performed along with the re-routing processing. The information may further include time (time point) information when the re-routing is executed and/or the number of packets for which the re-routing is executed. The information may be recorded (logged) in an internal memory of the IAB node 300-1 every time re-routing processing occurs. The report may be performed every time the re-routing processing is performed (that is, instantaneously), or may be performed in response to a request from the donor (that is, later).

In Step S146, the BAP layer of the IAB node 300-1 outputs the packet to the selected egress backhaul RLC channel of the selected egress backhaul link. The IAB node 300-1 transmits the packet to the next hop IAB node (or to donor DU #2 (200D2)).

Then, in Step S147, the IAB node 300-1 ends the series of processing.

### Summary of Third Operation Example

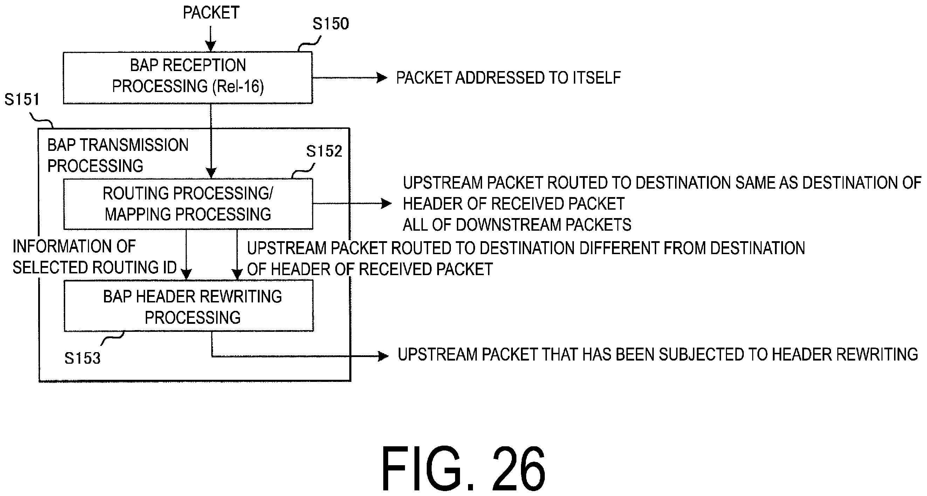

FIG. 26 is a summary of the third operation example according to the third embodiment.

In FIG. 26, Step S150 corresponds to Step S142 of FIG. 25. Step S152 of FIG. 26 corresponds to Step S143 and Step S144 of FIG. 25. Step S153 of FIG. 26 corresponds to Step S145 of FIG. 25.

In Step S150, the IAB node 300-1 performs the BAP reception processing. In this case, in a manner the same as and/or similar to the first embodiment, the IAB node 300-1 may receive the packet not only in the upstream direction but also in the downstream direction, and when the packet is addressed to the IAB node 300-1 (the packet may be in the downstream direction and the IAB node 300-1 may be the access IAB node), the IAB node 300-1 may output the packet to an upper node. In this case, the IAB node 300-1 performs the BAP transmission processing (Step S151) for the packet other than the packet addressed to the IAB node 300-1 out of the received packets.

In Step S152, the BAP layer of the IAB node 300-1 performs the routing processing and the mapping processing. In this case, the BAP layer determines that the packet in the upstream direction routed to a destination different from the destination included in the header of the received packet is the packet as a target of BAP header rewriting (Step S143 and Step S144 of FIG. 25). The BAP layer searches the routing table for the routing ID including the BAP address of the CU of another donor node associated with the destination of the header.

Then, in Step S153, the BAP layer performs the BAP header rewriting processing for the packet as a target of BAP header rewriting, using the routing ID (Step S144 of FIG. 25).

On the other hand, in Step S152, the BAP layer transmits the packet in the upstream direction that can be routed to the destination the same as the destination included in the header to the next hop node. The IAB node 300-1 also transmits the packet in the downstream direction as a target of the BAP transmission processing to the next hop node through the routing processing and the mapping processing.

### Variation of Third Operation Example

At least a part of the third operation example according to the third embodiment can also be applied to scenarios other than the inter-donor-DU re-routing.

### Fourth Embodiment

The first embodiment to the third embodiment respectively describe the scenarios of inter-topology routing (S3-1), inter-topology re-routing (S3-1), and inter-donor-DU re-routing (S2-2).

How to make a procedure or processing common to all of the scenarios to the extent possible may be a problem.

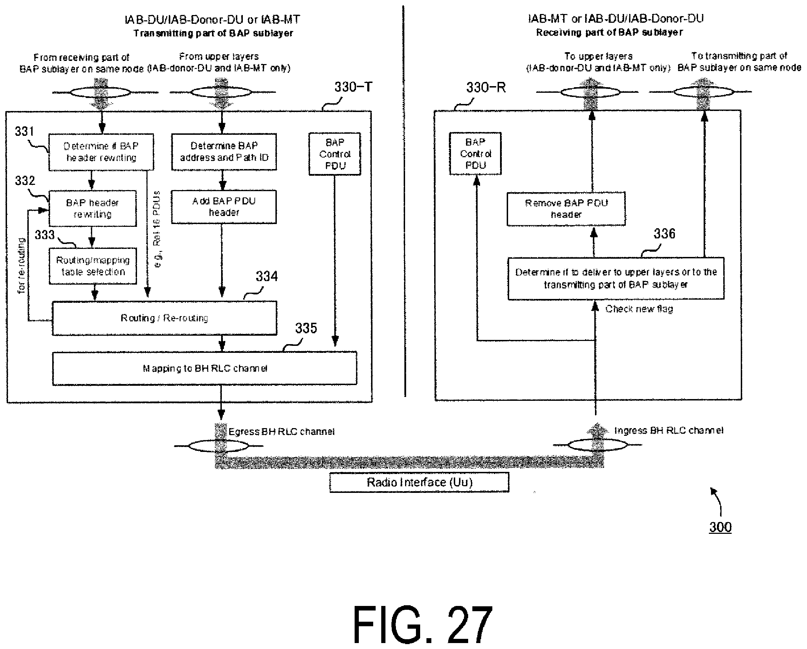

FIG. 27 illustrates an example when a procedure or processing is made common to all of the scenarios. FIG. 27 illustrates a configuration example of the IAB node 300 according to the fourth embodiment.

As illustrated in FIG. 27, the IAB node 300 includes a transmitter 330-T and a receiver 330-R.

The transmitter 330-T includes a BAP header rewriting determiner 331, a BAP header rewriter 332, a routing/mapping table selector 333, a routing/re-routing processor 334, and a mapping processor 335.

The receiver 330-R includes an upper layer output determiner 336.

The upper layer output determiner 336 determines whether to output a received packet to an upper layer or output the packet to the transmitter 330-T. For example, as described in the first embodiment, this may be determined based on the identifier included in the header of the packet, which indicates whether it is a target of inter-topology routing.

The BAP header rewriting determiner 331 determines whether to perform BAP header rewriting regarding the packet received from the receiver 330-R. For example, as described in the first embodiment, the BAP header rewriting determiner 331 may determine the packet as a target of BAP header rewriting (= packet as a target of inter-topology routing), depending on whether the header of the packet matches a specific routing ID. The BAP header rewriting determiner 331 outputs the packet as a target of BAB header rewriting to the BAP header rewriter 332, and outputs the packet not as a target of BAP header rewriting to the routing/re-routing processor 334.

The BAP header rewriter 332 rewrites the BAP header of the packet. As described in the first embodiment, the BAP header rewriter 332 may perform rewriting, using the BAP header rewriting table. The BAP header rewriter 332 may arrange not to perform BAP header rewriting for the packet that has not once been subjected to the routing processing, and may perform BAP header rewriting for the packet output from the routing/re-routing processor 334.

The routing/mapping table selector 333 selects the routing table and the mapping table. For example, as described in the first embodiment, the routing/mapping table selector 333 may select the second routing table and the second mapping table.

The routing/re-routing processor 334 may perform the routing processing and/or the re-routing processing for the packet that has been subjected to BAP header rewriting, and perform the routing processing and/or the re-routing processing for the packet that has not been subjected to BAP header rewriting. As described in the third embodiment, the routing/re-routing processor 334 may once perform the routing processing (and/or the re-routing processing), and output the packet having no destination to the BAP header rewriter 332.

The mapping processor 335 performs the mapping processing for the packet that has been subjected to the routing processing or the packet that has been subjected to the re-routing processing, using the mapping table. The mapping processor 335 transmits the packet that has been subjected to the processing to the next hop node via the egress backhaul RLC channel.

As described above, the configuration example of the IAB node 300 illustrated in FIG. 27 is an example.

The embodiments, the operation examples, the processing operations, or the steps described in the first embodiment to the fourth embodiment can be combined with each other. All or a part of the embodiments in the first embodiment to the fourth embodiment can be combined as long as they are not inconsistent with each other. Such combinations may allow the procedure or the processing to be common to all of the scenarios.

### Other Embodiments

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing the processes to be performed by the UE 100 or the gNB 200 may be integrated, and at least part of the UE 100 or the gNB 200 may be configured as a semiconductor integrated circuit (a chipset or an SoC).

Although embodiments have been described in detail with reference to the drawings, a specific configuration is not limited to those described above, and various design modifications and the like can be made without departing from the scope of the present disclosure.

The phrases "based on" and "depending on" used in the present disclosure do not mean "based only on" and "only depending on," unless specifically stated otherwise. The phrase "based on" means both "based only on" and "based at least in part on". Similarly, the phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

This application claims priority to US Provisional Patent Application No. 63/257223 (filed on October 19, 2021), the contents of which are incorporated herein by reference in their entirety.

### Supplementary Note

### Introduction

In RAN2 #115E, in a work item of enhancement to integrated access and backhaul (EIAB) for NR, the following agreement has been reached on enhancement of topology adaptation.

The threshold value configured for the available buffer size based on the flow control feedback is used to determine congestion for the purpose of local re-routing.

In a case of intra-CU, at least in scenarios of inter-donor-DU NR-DC, inter-donor-DU recovery, and inter-donor-DU movement, inter-donor-DU re-routing is supported.

Inter-CU re-routing is supported. That is, the IAB node re-routes data to the original donor CU via an alternative BAP path on the topology of the target CU.

In inter-donor-DU re-routing, BAP header rewriting "from a previous routing ID to a new routing ID" is supported.

In RAN2, Open Issues of inter-CU routing are further discussed.

What the BAP address added to the BAP header of the first topology (that is, the BAP address of ingress data in the boundary node) is.

How intra-topology routing (concatenated traffic) and inter-topology routing (non-cocatenated traffic) are differentiated.

A method for determining whether data should be delivered to an upper layer (for a downstream).

A method for determining whether the BAP header of data should be rewritten (routed to another topology or routed to its own topology).

As a baseline, in inter-CU routing, 1:1 and N: 1 mapping from a "previous routing ID" "to a new routing ID" for BAP header rewriting in the boundary node is supported.

As a baseline, in inter-CU routing, 1:1 and N: 1 mapping from "ingress BH link + ingress BH RLC ID" to "egress BH link + egress BH RLC ID" of bearer mapping in the boundary node is supported.

In the supplementary note, enhancement of routing and re-routing for various scenarios is discussed.

### Discussion

In REL-17, as illustrated in FIG. 9, routing and re-routing need to cover various scenarios, such as those for intra-CU/intra-donor-DU (the same as and/or similar to REL-16), intra-CU/inter-donor-DU, and inter-CU. Although it is expected that enhancement of these functions contributes to reliability, flexibility, or low latency of packet forwarding in the IAB topology, this may bring about further complexity in the BAP routing/re-routing operation. Thus, it is desirable to define a procedure common to all of the scenarios and reduce a procedure specific to a scenario to the extent possible. In this sense, inter-CPU routing, which is the most complicated scenario, needs to be studied first, and whether the procedure of inter-CPU routing can be applied to (reused for) other scenarios then needs to be studied.

### Inter-CU Routing

Regarding inter-CU routing, four Open Issues are agreed. It is a good start to study how to solve the Open Issues.

Open Issue 1: What the BAP address added to the BAP header of the first topology (that is, the BAP address of ingress data in the boundary node) is.

Some examples of solutions are given as follows.

Example 1: The BAP address of the boundary node is added to the BAP PDU header of the first topology.

Example 2: A proxy/pseudo BAP address of an actual destination is added.

On the other hand, RAN3 made an agreement on redundancy of the topology.

1A: In RAN3, it is assumed that the boundary node has only one BAP address in each topology.

1B: In RAN3, in each topology, it is assumed that the BAP address of the boundary node in the topology is used only for identifying a packet that needs to be delivered to an upper layer.

Although both of the examples may work, it is considered that Example 1 better matches the assumption (in particular, 1A) of RAN3. It can be said that because the boundary node can be considered as an end point of the first topology as with the IAB-donor DU or the access IAB node, Example 1 is very simple from the perspective of an REL-16 routing mechanism. In Example 1, when an intermediate IAB node executes local re-routing, risks of "misrouting" are reduced. In this sense, in RAN2, Example 1 should be agreed for the sake of further discussion.

Proposal 1: In RAN2, it should be agreed that, in the first topology, the BAP address of the boundary node is added to the BAP data PDU header (that is, a destination field).

### Open Issue 2: A method for differentiating intra-topology routing (concatenated traffic) and inter-topology routing (non-cocatenated traffic)

When Proposal 1 is agreed, in intra-topology routing (concatenated traffic (routing between two topologies belonging to different IAB donor CUs)), the BAP address of the boundary IAB node is provided in the destination field of the BAP data PDU header. On the other hand, in inter-topology routing (non-cocatenated traffic (routing within a topology belonging to one IAB donor CU)), another BAP address, that is, the BAP address of the IAB donor DU or the access IAB node, is provided. In other words, when the destination does not match the BAP address of the boundary IAB node, the BAP data PDU is delivered from the receiver to the transmitter of a co-location BAP entity. Thus, in the receiver, special processing is not required. However, it needs to be noted that the following Open Issue 3 is still present.

Proposal 2: In RAN2, it should be agreed that, in the receiver of the BAP entity, special processing for determining inter-topology routing (non-cocatenated traffic) is not required, that is, the operation of REL-16 is applied.

### Open Issue 3: A method for determining whether data can be delivered to an upper layer (downstream)

When Proposal 1 is agreed, intra-topology routing (concatenated traffic) and traffic addressed to the boundary IAB node have the same destination in each BAP data PDU header, that is, the BAP address of the boundary IAB node. With use of a path field or a new flag (one of three "R" bits is used) of each BAP data PDU header, the receiver of the BAP entity of the boundary IAB node can differentiate those.

When the path field is used, a routing ID space is consumed according to the number of paths configured between the boundary IAB node and the IAB donor DU/access IAB node. Because an existing field of the BAP header is reused, the data stream has no additional overhead.

When the new flag is used, it consumes the "R" bits, and with this, the three reserved bits are merely present. Because the "R" bits of the BAP header are used, no additional overhead is present. It is assumed that the flag is also useful in determining whether the BAP header is to be rewritten in the transmitter of the BAP entity.

With the advantages and disadvantages described above being taken into consideration, it is desirable to define a new flag using one "R" bit to determine data to be routed. Needless to say, when the new flag is configured to "0", this is completely the same as the BAP header format of REL-16, and thus the receiver of the BAP entity transmits data to an upper layer in accordance with the operation of REL-16.

Proposal 3: For inter-CU routing, in RAN2, it should be agreed that the new flag for differentiating the data to be routed and the data to be delivered to an upper layer is defined using one "R" bit of the BAP data PDU header.

### Open Issue 4: A method for determining whether the BAP header of data should be rewritten (routed to another topology or routed to its own topology)

When Proposal 2 and Proposal 3 are agreed, the transmitter of the BAP entity can first check the new flag of each BAP data PDU header. When the new flag is "0" (that is, inter-topology routing including an REL-16 BAP data PDU ((non-cocatenated traffic) or "routed to its own topology"), the REL-16 routing procedure is executed. (That is, in a case of intra-topology routing (concatenated traffic) or "routed to another topology")), the BAP header rewriting operation is executed before the routing procedure. This is not "re-routing", and thus it is natural that the BAP header rewriting operation is performed in advance.

Proposal 4: In RAN2, it should be agreed that whether BAP header rewriting is performed is determined for inter-CU routing, using the new flag of the BAP data PDU header of Proposal 3.

Proposal 5: In RAN2, regarding inter-CU routing, it should be agreed that BAP header rewriting is executed before the routing procedure.

When Proposal 3 and Proposal 5 are agreed, the new flag is used in the boundary IAB node. Thus, "after the BAP header rewriting operation" may be meaningless, or may rather cause an unnecessary error in the second topology. Thus, it is safe to rewrite the flag to "0" in the boundary IAB node. It is considered simple to perform this in the BAP header rewriting operation.

Proposal 6: In RAN2, regarding inter-CU routing, it should be discussed as to whether the new flag of Proposal 3 is also rewritten, that is, reset to "0", in the BAP header rewriting operation.

### Other Problems That May Be Considered

### Selection of Routing Table

When Proposal 5 is agreed, data whose header is rewritten in accordance with the header rewriting configuration proceeds to the routing procedure. In this case, as in the agreement reached in RAN2 of "as the priority of RAN2, inter-topology routing according to BAP header rewriting based on BAP Routing ID Option 4 is supported", the header of data is already rewritten to a new routing ID, and thus the routing table, that is, the BH routing configuration, configured in the first topology is not valid. Otherwise, the BAP address of each IAB node is unique in the topology, and even in the inter-CU routing scenario, it is not unique between two topologies (that is, two CUs), and thus risks of confusion and "misrouting" may arise. Thus, as the routing table, one configured by the second topology needs to be used.

Proposal 7: In RAN2, in the inter-CU scenario, it should be agreed that the boundary node is configured with two routing tables used for routing to each of the first topology and the second topology.

When Proposal 7 is agreed, a routing table selection procedure for each piece of data may be required before the routing procedure. The mechanism is considered very simple, and when the header is rewritten (or when the new flag is configured to " 1") regarding certain data, the second routing table is applied. Otherwise, the first routing table (that is, the same one as in REL-16) is applied.

Proposal 8: In RAN2, in the inter-CU scenario, it should be discussed as to whether a procedure for selecting the routing table of the second topology is required for intra-topology routing (concatenated traffic).

### BH RLC Channel Mapping Table Selection

When the next hop BAP address is determined in the routing procedure, mapping to the egress BH RLC channel is performed, based on the determined ingress BH link, ingress BH RLC channel, and egress BH link prepared in the mapping table (= BH RLC channel mapping configuration). In the present effective CR of TS 38.340, the following notes are provided.

NOTE: A further study needs to be carried out on how to record bearer mapping in the boundary IAB node (a further study also needs to be carried out on whether the present specification already supports bearer mapping in the boundary IAB node for inter-CU routing).

In a case of the inter-CU scenario, the ingress BH link and the RLC channel belong to the first topology, and the egress BH link is associated with the second topology. The BAP address and the RLC channel are managed by the CU (that is, for each topology), and thus a new mapping table is required to connect to two topologies. Specifically, although the structure of the mapping table of REL-16 can be reused, configuration with a mapping table different from REL-16 is necessary. Otherwise, when the same BAP address (that is, the ingress/egress link ID) and/or the same BH RLC channel ID is used in both of the topologies, risks of "mismapping" exist. In this case, selection of the mapping table the same as and/or similar to that of Proposal 8 may be required.

Proposal 9: In RAN2, in the inter-CU scenario, it is agreed that the boundary IAB node is configured with another mapping table (in addition to the REL-16 mapping table), and the mapping table is applied to intra-topology routing (concatenated traffic).

Proposal 10: In RAN2, in the inter-CU scenario, it is discussed as to whether a procedure for selecting an individual mapping table for connecting the two topologies of Proposal 9 is required in intra-topology routing (concatenated traffic).

### Inter-CU Re-Routing

### Applicability of BAP Header Rewriting Operation

In RAN2, an agreement is reached on "support of inter-ICU re-routing, that is, the IAB node re-routes data to the original donor CU via an alternative BAP path on the topology of the target CU". In general, the agreement can be considered the same as and/or similar to inter-CU routing. However, specifically, when the IAB node reestablishes RRC connection with the target donor CU, and F1 connection with the source donor CU is still maintained (that is, partial transition), inter-CU re-routing is applied. In RAN3, the following description likely to be applied to this scenario is agreed.

In partial inter-donor transition, the IP address, the BAP address, the BH RLC CH, and default mapping used by the boundary node for traffic of a specific topology are assigned by the CU of the topology, and those are configured via RRC.

In addition to the above configuration, RRC (of the target donor CU) also provides a (simple) routing table and/or header rewriting configuration used by the boundary IAB node. This is because the original routing ID of the BAP header of data re-routed to the original second topology is no longer valid, that is, the boundary IAB node needs to know a routing ID valid in a new second topology managed by the target donor CU. In this sense, the BAP header rewriting operation is also needed in inter-CU re-routing. In contrast to inter-CU routing, the BAP header rewriting operation is executed at the time point when the routing procedure fails as it is "re-routing", as is already recorded in BAP RUNNING CR. When Proposal 7 and Proposal 8 are agreed, selection of the routing table may also be applied to inter-CU re-routing. When Proposal 9 and Proposal 10 are agreed, selection of the BH RLC channel mapping table may also be applied.

Subsequently, the boundary IAB node can transmit data to the next hop BAP address, using the BH RLC channel configured by RRC of the new second topology, that is, the target donor CU.

Proposal 11: In RAN2, for inter-CU re-routing, it should be agreed that the boundary IAB node is configured by the IP address, the BAP address, the BH RLC channel, and the default mapping (as is agreed in RAN3), a default routing ID (or a simplified header rewriting table), and the like, via an RRC signal from the target donor.

Proposal 12: In RAN2, regarding inter-CU re-routing, it should be agreed that the BAP header rewriting operation is performed at the time point when routing (REL-16 routing) fails.

Proposal 13: In RAN2, regarding inter-CU re-routing, it should be discussed as to whether routing table selection (when Proposal 8 is introduced) and mapping table selection (when Proposal 10 is introduced) can be applied.

### Intra-CU/Intra-DU Re-Routing

In RAN2, "in inter-donor-DU re-routing, BAP header rewriting 'from a previous routing ID to a new routing ID' is supported" is agreed. On the other hand, in RAN3, the following is agreed.

In RAN3, it is desired that the boundary node executes BAP header rewriting regarding both of UL and DL traffic only for traffic routed in the BAP layer from a BH link of a certain topology to a BH link of its neighboring topology.

The topology is managed by the donor CU, and two donor DUs in the donor CU are considered intra-CU topology reduction, and thus it is still considered that inter-donor-DU re-routing is executed in one topology. In this case, the agreement in RAN2 may conflict with the priority of RAN3. However, the destination in upstream traffic is changed, that is, changed from the BAP address of the donor DU to the BAP address of another donor DU, according to inter-donor-DU re-routing, and thus the BAP header rewriting operation is naturally required. In downstream traffic, the destination (the BAP address of the access IAB node) is not changed, and thus the BAP header rewriting operation may not be required. Actually, it is assumed that downlink traffic is not a target of inter-donor-DU re-routing (that is, it is merely local re-routing). Accordingly, in RAN2, the agreement should be checked, even if it is different from the priority of RAN3.

Proposal 14: Regarding intra-CU/inter-DU re-routing, at least in the upstream traffic, the existing agreement in RAN2 of "BAP header rewriting 'from a previous routing ID to a new routing ID' is supported" is checked.

In Proposal 14, this is "re-routing", and thus in a manner the same as and/or similar to inter-CU re-routing of Proposal 12, the BAP header rewriting operation is performed at the time point when REL-16 routing fails. This is already recorded in the present RUNNING CR of TS 38.340, and can be simply checked.

Proposal 15: In RAN2, regarding intra-CU/inter-donor DU re-routing, as is recorded in the present effective CR of TS 38.340, it should be checked that the BAP header rewriting operation is performed at the time point when routing (that is, REL-16 routing) fails.

### Intra-CU/Intra-Donor-DU Re-Routing (= Local Re-Routing)

### Applicability of BAP Header Rewriting Operation

Intra-CU/intra-donor-DU re-routing is referred to as local re-routing, and is already supported from REL-16 as below.

NOTE: data buffering in a transmitter of a BAP entity until an RLC-AM entity receives an acknowledgment response is up to the implementation. For a BH RLF, the transmitter of the BAP entity can re-route, to the alternative path, the BAP data PDU unacknowledged from the lower layers before the BH RLF, in accordance with Clause 5.2.1.3.

When the BAP address matches the destination field and at least one entry available for the egress link corresponding to the next hop BAP address is present in the BH routing configuration,
the entry available for the egress link corresponding to the next hop BAP address is selected from the BH routing configuration with the BAP address being the same as the destination field.

The egress link corresponding to the next hop BAP address in the entry selected above is selected.

According to the present specification described above, as a result of local re-routing, the IAB node can transmit the BAP data PDU via the routing ID that matches the destination but does not match the path of the data.

On the other hand, in RAN2 #112-E, regarding local re-routing of REL-17, it is agreed that topology-wide objectives should be taken into consideration as follows.

In RAN2, local re-routing including advantages for central path determination and how the topology-wide objectives can be addressed are discussed.

With the above agreement being taken into consideration, in local re-routing of REL-16, selection of an alternative path is up to implementation of the IAB node, and thus a problem exists in that management may be difficult from the perspective of the donor. In REL-16 IAB topology, local re-routing is permitted only when the IAB node detects a BH RLF, that is, only in a specific abnormal state, and thus not a significant problem arises. However, in REL-17, local re-routing is also permitted in other conditions (for example, a congested state), and thus problems still remain regarding a method for satisfying the above agreement, although it does not apply exclusively. To achieve the topology-wide objectives, it is very easy to understand that the donor that manages the entire topology is best suited. In this sense, in comparison to the REL-16 mechanism, the donor needs to further enhance controllability of local re-routing, in terms of alternative path configuration.

Observation 1: In local re-routing of REL-16, which alternative path is selected is up to implementation of the IAB node, and it cannot be managed by the donor.

Observation 2: The IAB donor is a node best suited for addressing the topology-wide objectives using local re-routing.

To solve the problem, it is considered that the BAP header rewriting operation is one solution. In RAN2, the following agreement is reached.

It is assumed that the IAB donor configures an (alternative) egress link available in local re-routing (further studies on the same destination and the same routing ID are at least required).

The egress link is associated with the N next hop BAP address, and the next hop BAP address is determined according to the routing ID. Thus, it is natural that the donor side configures a new routing ID for the IAB node and performs local re-routing, and this is very similar to the header rewriting configuration of other (re-)routing scenarios.

I RAN3, it is desired that the BAP header writing operation is executed only in the inter-topology scenario; however, in RAN2, as described above, execution thereof even in the intra-topology scenario, that is, inter-donor DU re-routing, is already agreed.

It is considered worthwhile to discuss whether the BAP header rewriting operation is also applied to intra-CU/intra-DU re-routing, and is thereby executed only when the header rewriting configuration is configured (option).

Proposal 16: In RAN2, a discussion should be held regarding an option when BAP header rewriting is also applied to local re-routing (that is, intra-CU/inter-DU re-routing) and the IAB node is configured with mapping between an old routing ID and a new routing ID (that is, it is similar to the header rewriting configuration in the present effective CR of TS 38.340).

### Local Re-Route Command by Donor

As another aspect of the controllability of the IAB donor, it needs to be taken into consideration that the local re-routing and topology-wide objectives can coexist with the IAB donor recognizing the local re-routing and the local re-routing being started/stopped at the IAB node. For example, when the IAB donor finds that the topology-wide objectives cannot be achieved, the IAB donor may instruct the IAB node to start/stop local re-routing.

### How to address the topology-wide objectives through the local re-routing is completely up to on the implementation of the IAB donor, but the IAB donor may require information and controllability of local determination of the IAB node.

Proposal 17: In RAN2, it should be discussed as to whether the IAB node needs to notify the IAB donor when starting/stopping local re-routing.

Proposal 18: In RAN2, it should be discussed as to whether the IAB donor can instruct the IAB node to start/stop local re-routing for load distribution between the routes and the like.

### Summary of Enhancement of Functions

When the above proposals are agreed, an example of a solution integrating all of the scenarios is illustrated in FIG. 27.

## Claims

1. A communication control method in a boundary IAB node being an IAB node having RRC connection with a first IAB donor for controlling a first IAB topology and RRC connection with a second IAB donor for controlling a second IAB topology, having F1 connection with the first IAB donor, and not having F1 connection with the second IAB donor, the communication control method comprising:
receiving BAP header rewriting configuration information from the first IAB donor;
receiving a BAP packet from a lower IAB node;
performing BAP header rewriting processing for the BAP packet received, based on header information of the BAP packet and the BAP header rewriting configuration information; and
performing routing, via the second IAB topology, of the BAP packet for which the BAP header rewriting processing has been performed.

2. The communication control method according to claim 1, wherein
the BAP header rewriting configuration information comprises a plurality of entries,
each of the plurality of entries comprises a first routing ID and a second routing ID, and
the performing of the BAP header rewriting processing comprises performing the BAP header rewriting processing, when destination information comprised in the header information of the BAP packet matches a BAP address comprised in the first routing ID, and path information comprised in the header information of the BAP packet matches a path identifier comprised in the first routing ID.

3. The communication control method according to claim 1, further comprising
receiving routing configuration information from the first IAB donor, wherein
the routing configuration information comprises a plurality of entries,
each of the plurality of entries comprises a routing ID, and
the performing of the routing via the second IAB topology comprises performing the routing, using the routing ID comprised in an entry, among the plurality of entries, configured with an indicator indicating application to the routing via the second IAB topology.

4. A boundary IAB node being an IAB node having RRC connection with a first IAB donor for controlling a first IAB topology and RRC connection with a second IAB donor for controlling a second IAB topology, having F1 connection with the first IAB donor, and not having F 1 connection with the second IAB donor, the boundary IAB node comprising
a processor configured to execute
processing of receiving BAP header rewriting configuration information from the first IAB donor,
processing of receiving a BAP packet from a lower IAB node,
processing of performing BAP header rewriting processing for the BAP packet received, based on header information of the BAP packet and the BAP header rewriting configuration information, and
processing of performing routing, via the second IAB topology, of the BAP packet for which the BAP header rewriting processing has been performed.
